# EUROPEAN PATENT SPECIFICATION

(11) **EP 4 472 114 B1**
(45) Date of publication and mention of the grant of the patent: **02.12.2026**
(21) Application number: 22921204.8
(22) Date of filing: 24.01.2022
(51) Int. Cl.: H04L 1/18, H04W 72/56

(54) **SIDELINK FEEDBACK CHANNEL TRANSMISSION METHOD AND APPARATUS, TERMINAL, AND STORAGE MEDIUM**
VERFAHREN UND VORRICHTUNG ZUR ÜBERTRAGUNG EINES SIDELINK-FEEDBACKKANALS, ENDGERÄT UND SPEICHERMEDIUM
PROCÉDÉ ET APPAREIL DE TRANSMISSION DE CANAL DE RÉTROACTION DE LIAISON LATÉRALE, TERMINAL ET SUPPORT DE STOCKAGE

(43) Date of publication of application: 04.12.2024
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Shichang, Dongguan, Guangdong 523860 (CN); LIN, Huei-Ming, Taipei 111 (TW)
(74) Representative: Novagraaf Technologies
(86) International application number: PCT/CN2022/073592
(87) International publication number: WO 2023/137768

(56) References cited:
- WO-A1-2021/071234
- WO-A1-2021/071234
- CN-A- 111 083 732
- CN-A- 113 169 830
- US-A1- 2020 351 032
- US-A1- 2021 218 509
- US-A1- 2022 377 761
- LG ELECTRONICS: "Feature lead summary #3 for AI 7.2.4.5 Physical layer procedures for sidelink", 3GPP DRAFT; R1-1913572, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 25 November 2019 (2019-11-25), Mobile Competence Centre ; 650, route des Lucioles ; F-06921 Sophia-Antipolis Cedex ; France , XP051830849

## Description

### TECHNICAL FIELD

The present disclosure relates to the technical field of vehicle-to-everything (V2X) communications, and in particular, relates to a method and apparatus for transmitting sidelink feedback channels, and a chip thereof.

### BACKGROUND

A sidelink (SL) transmission mode is introduced to achieve direct communications between terminals in a V2X system. US 2021/218509 A1 discloses an HARQ feedback method and a UE performing the HARQ feedback method. The HARQ feedback method includes transmitting a physical sidelink control channel (PSCCH)/physical sidelink shared channel (PSSCH) to a second UE, and receiving a physical sidelink feedback channel (PSFCH) transmitted by the second UE performing the HARQ feedback according to a decoding result of the PSCCH/PSSCH. WO 2021/071234 A1 (& US 2022/377761 A1) discloses a method by which a first device performs wireless communication. The method can comprise the steps of: receiving a plurality of first PSCCHs; receiving a plurality of first PSSCHs related to the plurality of first PSCCHs; transmitting a plurality of second PSCCHs; transmitting a plurality of second PSSCHs related to the plurality of second PSCCHs; and performing any one related to a high priority from among the transmission of a plurality of first PSFCHs and the reception of a plurality of second PSFCHs on the basis of a first priority of the transmission of a plurality of first PSFCHs related to the reception of the plurality of first PSSCHs and a second priority of the reception of a plurality of second PSFCHs related to the transmission of the plurality of second PSSCHs.

### SUMMARY

Embodiments of the present disclosure provide a method and apparatus for transmitting sidelink feedback channels, and a chip thereof.

According to some embodiments of the present disclosure, a method for transmitting sidelink feedback channels is provided as defined in claim 1.

According to some embodiments of the present disclosure, an apparatus for transmitting sidelink feedback channels is provided as defined in claim 10.

According to some embodiments of the present disclosure, a chip is provided as defined in claim 11.

### BRIEF DESCRIPTION OF DRAWINGS

For clearer description of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a block diagram of a communication system supporting SL transmission according to some embodiments of the present disclosure;
FIGS. 2 to 4 are schematic diagrams of three scenarios of SL transmission according to some embodiments of the present disclosure;
FIG. 5 is a schematic diagram of SL transmission and SL feedback according to some embodiments of the present disclosure;
FIG. 6 is a schematic diagram of a frame structure of SL transmission within a slot according to some embodiments of the present disclosure;
FIG. 7 is a schematic diagram of a time frequency of a SL channel state information reference signal (CSI-RS) according to some embodiments of the present disclosure;
FIG. 8 is a schematic diagram of a time frequency resource of PSFCHs during two cycles according to some embodiments of the present disclosure;
FIG. 9 is a schematic diagram of SL transmission performed by two terminals over beams according to some embodiments of the present disclosure;
FIG. 10 is a flowchart of a method for transmitting sidelink feedback channels according to some embodiments of the present disclosure;
FIG. 11 is a schematic diagram of SL transmission performed by several terminals over beams according to some embodiments of the present disclosure;
FIG. 12 is a flowchart of a method for transmitting sidelink feedback channels according to some embodiments of the present disclosure;
FIG. 13 is a flowchart of a method for transmitting sidelink feedback channels according to some embodiments of the present disclosure;
FIG. 14 is a flowchart of a method for transmitting sidelink feedback channels according to some embodiments of the present disclosure;
FIG. 15 is a block diagram of an apparatus for transmitting sidelink feedback channels according to some embodiments of the present disclosure; and
FIG. 16 is a schematic structural diagram of a communication device according to some embodiments of the present disclosure.

### DETAILED DESCRIPTION

For clearer descriptions of the objects, technical solutions, and advantages of the present disclosure, the embodiments of the present disclosure are described in detail hereinafter in combination with the accompanying drawings.

The V2X is a key technology in future smart transportation system, and is mainly aimed at researching vehicle data transmission schemes of a third generation partnership project (3GPP) communication protocol. V2X communications include vehicle-to-vehicle (V2V) communications, vehicle-to-infrastructure (V2I) communications, vehicle-to-people (V2P) communications, and the like. V2X applications improve driving safety, reduce congestion and vehicle energy consumption, increase traffic efficiency, and the like. the V2X belongs to device-to-device (D2D) communications. The D2D communications allow direct communication between different terminals.

SL communication is a communication mode introduced in a D2D application scenario and extended and enhanced in the V2X system. The SL is a new type of a link introduced for supporting direct communication between devices, and has a higher spectral efficiency and a low transmission delay. Compared with Uu interface communication, the SL communication has short delay, low overhead, and the like, and thus is suitable for direct communication between a vehicle-mounted device and other peripheral devices at near geographical locations. The SL communication in the present disclosure supports all scenarios applicable to the SL communication, for example, at least one of the D2D or the V2X.

With the development of the 5^{th} generation (5G) mobile communication technology, services and scenarios of the new V2X communication are supported using the 5G new radio (NR) technology in the R16 of the 3GPP, for example, vehicles platooning, extended sensors, advanced driving, remote driving, and the like. In general, a 5G V2X SL provides a higher communication rate, a shorter communication delay, and a more reliable communication quality.

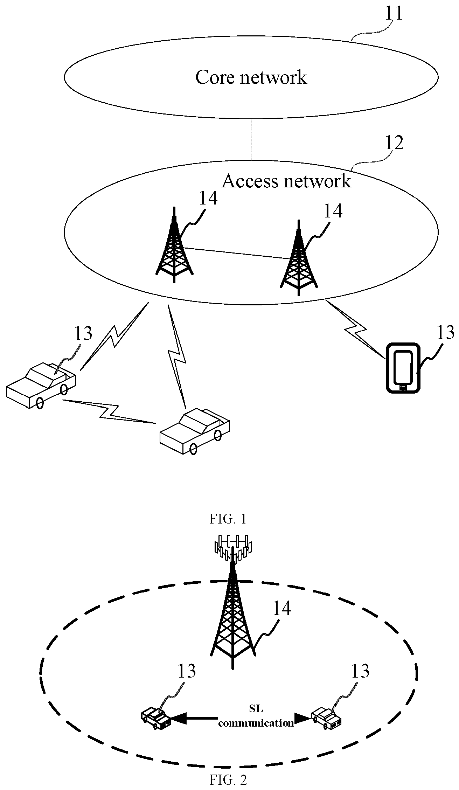

FIG. 1 is a block diagram of a communication system supporting SL transmission according to some embodiments of the present disclosure. The SL communication network architecture includes a core network 11, an access network 12, and a terminal 13.

The core network 11 includes several core network devices. Each of the core network devices mainly functions as providing user connection, user management, and service carrying, and is determined as a carrying network for providing an interface to an external network. For example, the core network of the 5G NR system includes an access and mobility management function (AMF) entity, a user plane function (UPF) entity, a session management function (SMF) entity, and other devices.

The access network 12 includes several access network devices 14. The access network in the 5G NR system is also referred to as a new generation-radio access network (NG-RAN). Each of the access network device 14 is a device disposed in the access network 12 and configured to provide a wireless communication function for the terminal 13. The access network device 14 includes various types of macro base stations, micro base stations, relay stations, access points, and the like. In systems using different radio access technologies, names of the devices with the access network device function are different, for example, referred to as the 5G base station (next generation NodeB, gNodeB, or gNB) in 5G NR systems. With the evolution of communications technologies, the name "access network device" changes. For convenient description, the above devices providing the wireless communication function for the terminal 13 are collectively referred to as the access network device in the embodiments of the present disclosure.

Generally, a plurality of terminals are provided. One or more terminals 13 are disposed in a cell managed by each of the access network devices 14. The terminal 13 includes various handheld devices, vehicle-mounted devices, wearable devices, computing devices or other processing devices connected to wireless modems, various forms of user devices, mobile stations (MS), and other devices with the wireless communication function. For convenient description, the above devices are collectively referred to as the terminal. The access network device 14 and the core network device communicate with each other using the air interface technology, such as the NG interface in the 5G NR system. The access network device 14 and the terminal 13 communicate with each other using the air interface technology, such as a Uu interface.

The terminal 13 and the terminal 13, for example, the vehicle-mounted device and other devices (such as other vehicle-mounted devices, mobile phones, road side units (RSU), or the like), communicate with each other over a direct communication interface (for example, a PC5 interface), and the communication link over the direct communication interface is accordingly referred to as a direct link or SL. The SL communication indicates that the direct communication data transmission between the terminals is achieved over the SL, and is different from the traditional cellular system in which the communication data is received or transmitted through the access network device. Thus, the SL communication has the characteristics of short delay and low overhead, and is suitable for the communication between two terminals at near geographical locations (such as a vehicle-mounted device and other peripheral devices at near geographical locations). It should be noted that in FIG. 1, only the vehicle-to-vehicle communication in the V2X scenario is taken as an example, and the SL technology is applicable to the scenario where various terminals directly communicate with each other. In other words, the terminal in this application refers to any kind of equipment that uses SL technology to communicate. In other words, the terminal in the present disclosure is any device carrying out the communication using the SL technology.

The "5G NR system" in the embodiments of the present disclosure is also referred to as a 5G system or a NR system, and those skilled in the art can understand the meaning. The technical solutions in the embodiments of the present disclosure are applicable to the 5G NR system and evolved systems of the 5G NR system.

The user equipment (UE) in the embodiments of the present disclosure has the same meaning as the terminal, and the UE and the terminal are exchangeable. The network side in the embodiments of the present disclosure may be construed as at least one of an access network, a core network, an access network device, or a core network device.

The SL communication is categorized into SL communication within the network coverage, SL communication partially within the network coverage, and SL communication outside the network coverage based on network coverage of the communicated terminal.

FIG. 2 is a schematic diagram of a network architecture of SL communication within the network coverage. All terminals 13 in SL communication are within a coverage range of the same access network device 14, and all terminals 13 achieve the SL communication based on the same SL configuration by receiving the configuration signaling of the access network device 14.

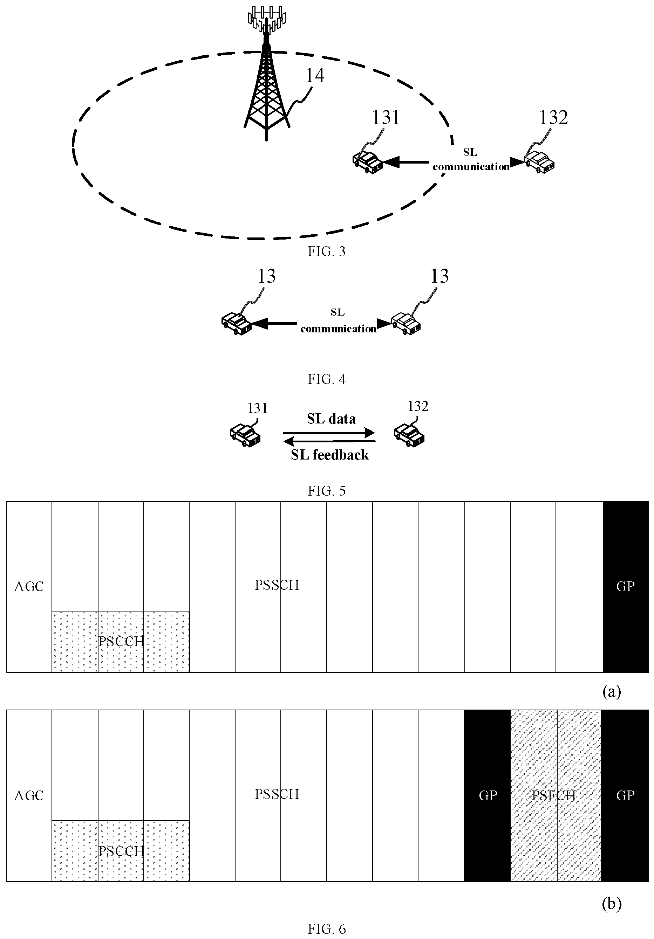

FIG. 3 is a schematic diagram of a network architecture of SL communication partially within the network coverage. A first terminal 131 in SL communication is within a coverage range of the station, and the first terminal 131 achieves the SL communication based on the configuration of the access network device 14 by receiving the configuration signaling of the access network device 14. A second terminal 132 beyond the network coverage range fails to receive the configuration signaling of the access network device 14. In this case, the second terminal 132 beyond the network coverage range determines the SL configuration and achieves the SL communication based on pre-configuration information and information carried in a physical sidelink broadcast channel (PSBCH) transmitted by the first terminal 131 within the network coverage range.

FIG. 4 is a schematic diagram of a network architecture of SL communication outside the network coverage. All terminals 13 in SL communication are beyond the network coverage range, and all terminals 13 determine the SL configuration and achieve the SL communication based on the pre-configuration information.

For the SL communication, two transmission modes are defined in the 3GPP: a mode A and a mode B.

In the mode A (also referred to as a mode 1, a mode 3, or a station scheduling mode), transmission resources of the terminal are allocated by the access network device (such as the station), and the terminal transmits communication data in the SL over the transmission resources allocated by the access network device. The access network device allocates transmission resources of one transmission process or transmission resources of semi-static transmission for the terminal.

In the mode B (also referred to as a mode 2, a mode 4, or a resource autonomous selection mode of the UE), the terminal autonomously selects transmission resources from a preconfigured resource pool or a resource pool configured on the network side, and transmits the communication data. Specifically, the terminal selects the transmission resources from the resource pool by monitoring, or selects the transmission resources from the resource pool in a random selection mode.

In the NR-V2X, the sidelink feedback channels are introduced to improve the reliability. As shown in FIG. 5, for unicast transmission, the first terminal 131 transmits the SL data to the second terminal 132, and the SL data includes a physical sidelink control channel (PSCCH) and a physical sidelink shared channel (PSSCH). The second terminal 132 transmits hybrid automatic repeat request (HARQ) feedback information including acknowledgement (ACK) and negative acknowledgement (NACK) to the first terminal 131, and the first terminal 131 determines, based on the feedback information of the second terminal 132, whether to retransmit the SL data. The HARQ feedback information is carried in the PSFCH.

In the NR-V2X, a frame structure of a slot is shown in FIG. 6. FIG. 6(a) shows a slot structure not including the PSFCH, and FIG. 6(b) shows a slot structure including the PSFCH.

A physical sidelink control channel (PSCCH) in the NR-V2X starts from a second SL symbol of a slot in a time domain, occupies two or three orthogonal frequency-division multiplexing (OFDM) symbols, and {10, 12 15, 20, 25} physical resource blocks (PRBs) in a frequency domain. Only a number of the PSCCH symbols and only a number of the PRBs are permitted to be configured in a resource pool to reduce the complexity of blind detection of the PSCCH by the terminal. In addition, since a sub-channel is a minimum unit in allocating PSSCH resources in the NR-V2X, the number of the PRBs occupied by the PSCCH must be less than or equal to the number of the PRBs in the sub-channel in the resource pool to avoid additional limitation on selection or allocation of the PSSCH resources. The PSSCH also starts from the second SL symbol of the slot in a time domain, a last time-domain symbol of the slot is a guard period (GP) symbol, and other symbols are for mapping the PSSCH. A first SL symbol of the slot is repetition of a second SL symbol, a receiver terminal generally uses the first SL symbols as an automatic gain control (AGC) symbol, and data in the symbol generally is not used for data demodulation. The PSSCH occupies K sub-channels in the frequency domain, and each sub-channel includes N continuous PRBs, as shown in FIG. 6(a).

In the case that the slot includes the PSFCH, a second-to-last symbol and a third-to-last symbol in the slot are used for PSFCH transmission, and a time-domain symbol prior to the PSFCH is used as the GP symbol, as shown in FIG. 6(b).

For better support for unicast communication, the NR-V2X supports a SL CSI-RS, and the SL CSI-RS is transmitted in meeting the following three conditions:
- The UE transmits a corresponding PSSCH, that is, the UE cannot only transmit the SL CSI-RS.
- High layer signaling activates SL CSI report.
- In the case that the high layer signaling activates the SL CSI report, a corresponding bit in a second order sidelink control information (SCI) transmitted by the terminal triggers the SL CSI report.

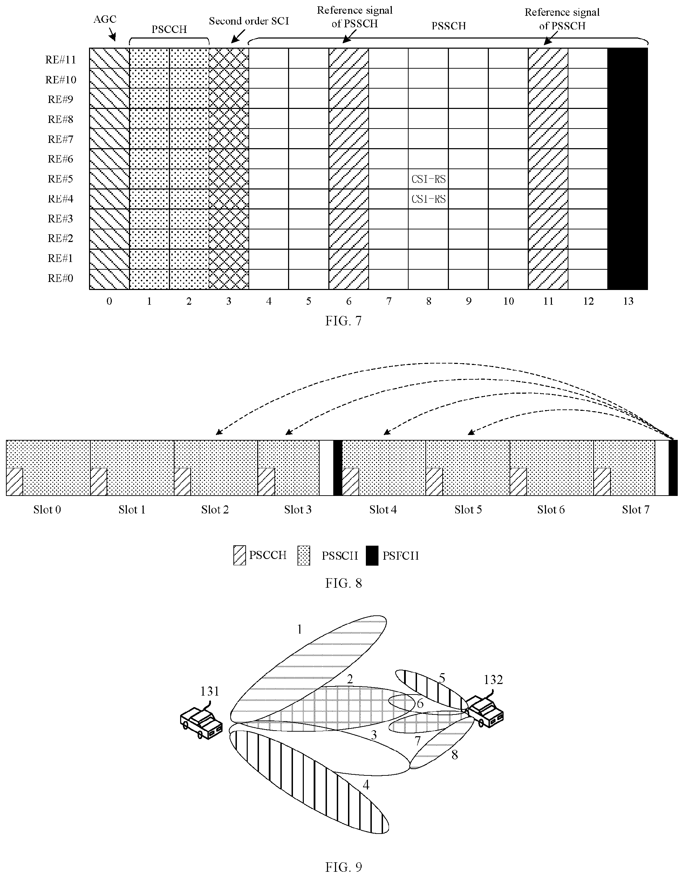

As shown in FIG. 7, a maximum number of ports supported by the SL CSI-RS is 2. In the case that the SL CSI-RSs are transmitted by two ports, the SL CSI-RSs of the same port occupy two adjacent REs of a same OFDM symbol, the SL CSI-RSs of two ports are multiplexed on the same RE in a yardage mode, and a density of the SL CSI-RS is 1. That is, an average number of the REs occupied by the SL CSI-RS in each port in the PRB is 1. Thus, the SL CSI-RSs are present on at most one OFDM symbol in the PRB, and a specific location of the OFDM symbol is determined by a transmitter terminal. The SL CSI-RSs are not located in the same OFDM symbol as the PSCCH and the second order SCI to avoid an effect on resource mapping of the PSCCH and the second order SCI. As a channel estimation accuracy of the OFDM symbol of a PSCCH demodulation reference signal (DMRS) is great, and the SL CSI-RSs of two ports occupy two continuous REs in the frequency domain, the SL CSI-RSs are not transmitted to the same OFDM symbol as the DMRS of PSCCH. The location of the OFDM symbol of the SL CSI-RSs is indicated by a sl-CSI-RS-FirstSymbol parameter in the PC5-radio resource control (RRC).

A location of the first RE occupied by the SL CSI-RS in the PRB is indicated by the sl-CSI-RS-FreqAllocation parameter in the PC5-RRC. In the case that the SL CSI-RS is configured as a port, the parameter is a bitmap with a length of 12, corresponding to 12 REs in one PRB. In the case that the SL CSI-RS is configured as two ports, the parameter is a bitmap with a length of 6. In this case, the SL CSI-RS occupies two REs: 2*f* (1) and 2*f* (1) +1. *f*(1) represents an index of a bit with a value of 1 in the above bitmap. A frequency-domain location of the SL CSI-RS is determined by the transmitter terminal, and the determined SL CSI-RS frequency-domain location is not conflicted with the PT-RS. FIG. 7 is a schematic diagram of a time frequency of a SL CSI-RS. In the schematic diagram, the number of SL CSI-RS ports is two, the sl-CSI-RS-FirstSymbol is 8, and the sl-CSI-RS-FreqAllocatio is [*b*₅, *b*₄, *b*₃, *b*₂, *b*₁, *b*₀] = [0, 0, 0, 1, 0, 0].

For reduction of the payload of the PSFCH, one of the N slots includes the PSFCH transmission resource in some practices. That is, a period of the SL feedback resource is P slots, and P is a positive integer. In some embodiments, P is 1, 2, or 4, and is pre-configured or configured by a network. FIG. 8 shows an example of P being 4, and eight slots are shown in FIG. 8. In the slots 0 to 3, the slot 3 includes the transmission resource of the PSFCH. In the slots 4 to 7, the slot 7 includes the transmission resource of the PSFCH.

Feedback information of the PSSCHs transmitted in the slots 2, 3, 4, and 5 is transmitted in the slot 7, and thus the slots {1, 3, 4, 5} is determined as a slot set. The PSFCHs corresponding to the PSSCHs transmitted in the slot set are transmitted in the same slot.

It can be seen from FIG. 8 that the PSFCHs corresponding to the PSSCHs transmitted in a plurality of slots are transmitted in the same slot, and thus the terminal needs to transmit or receive a plurality of PSFCHs in the same slot. In the case that the terminal needs to transmit or receive a plurality of PSFCHs in the same slot, transmission conflict occurs.

The SL transmission system further supports the transmission over the beam. In the case that the transmission and reception over the beam are supported in the SL transmission, transmission or reception over the simulation beam is generally used, and the terminal only supports one transmission beam or one reception beam at a same time. In conjunction with FIG. 9, the terminal 131 and the terminal 132 achieves the SL transmission over the beam. By taking the terminal 131 being a data transmitter and the terminal 132 being a data receiver as an example:

In determining the transmission wave, the terminal 131 transmits the SL reference signal in the beams (beams 1 to 4), and the SL reference signal includes, but is not limited to at least one of a SL DM-RS, a SL CSI-RS, or a phase tracking reference signal (PTRS). By taking the SL reference signal being the SL CSI-RS as an example, the terminal transmits the SL CSI-RS#1 over the beam 1, transmits the SL CSI-RS#2 over the beam 2, transmits the SL CSI-RS#3 over the beam 3, and transmits the SL CSI-RS#4 over the beam 4. The terminal 132 receives the SL reference signal omnidirectionally, receives the SL reference signal over a determined reception beam or receives the SL reference signal over any random reception beam. FIG. 9 is illustrated by taking the terminal 132 receiving the SL reference signal over the reception beam 6 as an example. The terminal 132 measures various SL CSI-RSs, and feeds back one or more SL CSI-RS resource information with the best measurement result and the measurement result to the terminal 131. For example, the terminal 132 feeds back the resource information of the SL CSI-RS#2 and the measurement result to the terminal 131 in the case that the measurement result of the SL CSI-RS#2 is best.

Upon receiving the resource information of the SL CSI-RS#2 and the measurement result, the terminal 131 configures a transmission configuration indicator (TCI) state to the terminal 132. The reference signal associated with the TCI state is the SL CSI-RS#2, and the terminal 132 determines the reception beam 6 as the reception beam in acquiring the TCI state information.

The terminal 131 transmits the SL data 1 to the terminal 132 over the beam 2, and the terminal 132 receives the SL data 1 over the beam 6. In the case that the SL data 1 activates the SL feedback, the terminal 132 needs to transmit SL feedback information PSFCH#1 of the SL data 1 to the terminal 131. In particular, the terminal 132 determines the transmission beam for transmitting the PSFCH#1 by one of the following methods:
- The terminal 132 determines the transmission beam for transmitting the PSFCH#1 over the reception beam for receiving the SL data 1. In the case that the terminal 132 receives, over the reception beam 6, the SL data 1 transmitted by the terminal 131 over the transmission beam 2, and the terminal 132 has a beam correspondence capability, the terminal 132 determines the corresponding transmission beam over the reception beam 6, and transmits the PSFCH#1 over the transmission beam. Correspondingly, in the case that the terminal 131 has the beam correspondence capability, the terminal 131 determines the corresponding reception beam over the transmission beam 2, and receives the PSFCH#1 transmitted by the terminal 132 over the reception beam;
- The terminal 132 transmits the PSFCH#1 over the transmission beam used in transmitting the SL data 2 by the terminal 131. In the case that the terminal 132 needs to transmit the SL data 2 to the terminal 131, a process of determining the transmission beam is needed, and a target transmission beam is selected to transmit the SL data 2. In the case that the terminal 132 transmits the PSFCH#1 to the terminal 131, the PSFCH#1 is transmitted over the target transmission beam. Correspondingly, the reception beam used by the terminal 131 in receiving the SL data 2 transmitted by the terminal 132 is the target reception beam, and the PSFCH#1 transmitted by the terminal 132 is received over the target reception beam.

The TCI state includes the following configurations:
- a TCI state identifier (ID), configured to identify a TCI state;
- quasi-co-location (QCL) information 1; and
- QCL information 2 (optional).

One piece of QCL information further includes the following information:
- QCL type information, being one of the QCL-TypeA, QCL-TypeB, QCL-TypeC, and QCL-TypeD; and
- QCL reference signal configuration, including an ID of a cell of a reference signal, a BWP ID, and an ID of the reference signal (CSI-RS resource ID or synchronization signal block (SSB) index).

In the case that the QCL information 1 and the QCL information 2 are configured, the QCL type of at least one piece of the QCL information is one of TypeA, TypeB, and TypeC, and the QCL type of the other piece of the QCL information is Type D.

Different QCL type configurations are defined as follow:
- QCL-TypeA: {Doppler translation, Doppler spread, average delay, delay spread};
- QCL-TypeB: {Doppler translation, Doppler spread};
- QCL-TypeC: {Doppler translation, average delay}; and
- QCL-TypeD: {spatial reception parameter}.

In the case that the terminal needs to transmit a plurality of PSFCHs, the plurality of PSFCHs correspond to different transmission beams. In the case that the terminal needs to receive a plurality of PSFCHs, the plurality of PSFCHs correspond to different reception beams. In this case, how to determine transmit or receive the PSFCH by the terminal is an urgent technical problem to be solved.

It should be noted that the beam in the embodiments of the present disclosure refers to the transmission beam and/or reception beam without illustration, the beam is formed by beam forming or a spatial domain filtering, and the spatial domain filtering is achieved by a spatial domain filter. The beam forming and the spatial domain filtering are construed in the same way, or one beam corresponds to one spatial domain filter. Transmission beam forming and the spatial domain transmission filtering are construed in the same way, or one transmission beam corresponds to one spatial domain transmission filter. Reception beam forming and the spatial domain reception filtering are construed in the same way, or one reception beam corresponds to one spatial domain reception filter. In some embodiments, the spatial domain transmission filter is also referred to as a spatial domain transfer filter.

The terminal device in the embodiments of the present disclosure is also referred to as UE, a mobile station (MS), a mobile terminal (MT), a user unit, a user station, a mobile station, a remote station, a remote terminal device, a mobile device, a user terminal device, a terminal, a radio communication device, a user agent or a user device. The terminal device in the embodiments of the present disclosure includes one or a combination of the at least two of: a personal digital assistant (PDA), a handheld device with a radio communication capability, a computing device or other processing devices connected to a radio modem, a server, a mobile phone, a Pad, a computer with radio transceiver function, a handheld computer, a desktop computer, a personal digital assistant, a portable media player, a smart speaker, a navigation device, a smart watch, a smart glasses, a smart necklace and other wearable devices, a pedometer, a digital TV, a virtual reality (VR) terminal device, an augmented reality (AR) terminal device, a radio terminal device in industrial control, a radio terminal device in self-driving, a radio terminal device in remote medical surgery, a radio terminal device in smart grid, a radio terminal device in transportation safety, a radio terminal device in smart city, a radio terminal device in smart home, a vehicle in a vehicular networking system, a vehicle-mounted device, a vehicle module, a radio modem, a handheld device, a customer premise equipment (CPE), a smart home appliances, and the like.

In addition, the terms "system" and "network" herein are exchangeable. The term "and/or" herein describes associations between associated objects, and indicates three types of relationships. For example, the phrase "A and/or B" means (A), (B), or, (A and B). The character "/" generally indicates that the associated objects are in an "or" relationship. It should also be understood that the term "indication" in the embodiments of the present disclosure refers to direct or indirect indication, or an associated relationship. Illustratively, in the case that A indicates B, it means that: A directly indicates B, for example, B can be acquired through A; A indirectly indicates B, for example, A indicates C, and B can be acquired through C; or A and B have an association relationship. It should also be understood that the term "correspondence" in the embodiments of the present disclosure means that there is a direct correspondence or indirect correspondence between the two objects, there is an association between the two objects, or there is a relationship of indicating and being indicated, configuring and being configured, or the like. It should also be understood that the terms "predefined," "protocol," "predetermined," or "predefined rules" in the embodiments of the present disclosure are achieved by pre-storing corresponding codes or forms in the device (including, for example, a network device and a terminal device) or other means for indicating relevant information, and specific implementations are not limited in the present disclosure. For example, the predefinition is defined in the protocol. It should also be understood that the "protocol" in the embodiments of the present disclosure is a standard protocol in the communication field, and includes, for example, an LTE protocol, an NR protocol, and related protocols used in the future communication system, which is not limited in the present disclosure.

In a SL system supporting beam transmission, how to address the conflict between transmission and reception of a physical sidelink feedback channel (PSFCH) is an urgent technical problem to be resolved.

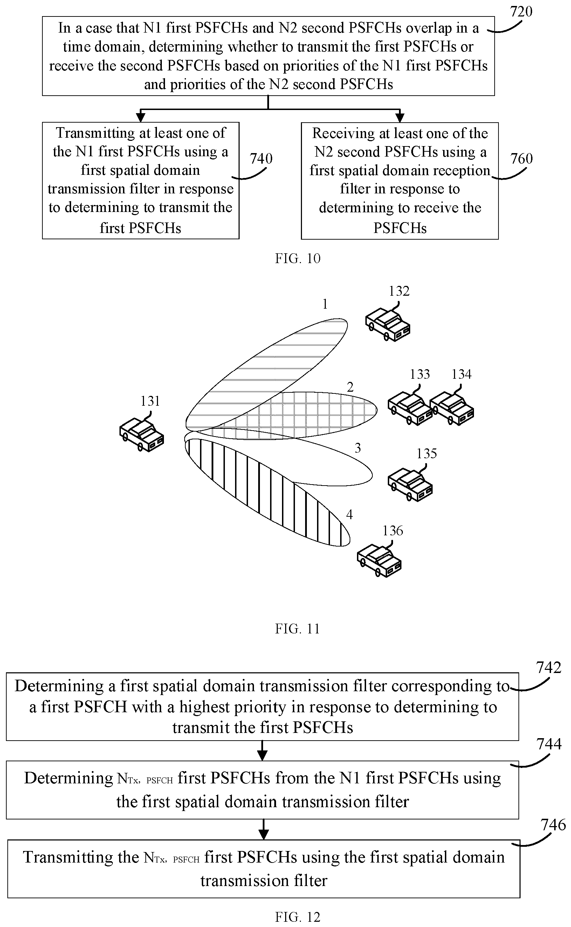

FIG. 10 is a flowchart of a method for transmitting sidelink feedback channels according to some embodiments of the present disclosure. The method is performed by a terminal supporting the SL communication. Illustratively, the method is performed by the terminal in the SL system supporting beam transmission, and includes at least one of the following processes.

**In S720,** in a case that N1 first PSFCHs and N2 second PSFCHs overlap in a time domain, whether to transmit the first PSFCHs or receive the second PSFCHs is determined based on priorities of the N1 first PSFCHs and priorities of the N2 second PSFCHs.

In some embodiments, the priorities of the N1 first PSFCHs indicate a priority corresponding to a PSFCH with a highest priority in the N1 first PSFCHs, and the priorities of the N2 second PSFCHs indicate a priority corresponding to a PSFCH with a highest priority in the N2 second PSFCHs.

In the SL communication, the same terminal is determined as a transmitter terminal and a receiver terminal.

In the case that the terminal includes the N1 first PSFCHs and the N2 second PSFCHs overlapped in the time domain for the PSFCH resource in the slot x, that is, transmission conflict or resource conflict occurs between the N1 first PSFCHs and N2 second PSFCHs, wherein the first PSFCHs are to-be-transmitted PSFCHs, the second PSFCHs are to-be-received PSFCHs, and N1 and N2 are both positive integers, the terminal determines itself behavior: to transmit the first PSFCHs or receive the second PSFCHs based on the priorities of the N1 first PSFCHs and the priorities of the N2 second PSFCHs.

The overlap of the N1 first PSFCHs and the N2 second PSFCHs in the time domain indicates complete overlap of the N1 first PSFCHs and the N2 second PSFCHs in the time domain or partial overlap of the N1 first PSFCHs and the N2 second PSFCHs in the time domain. In some embodiments, the PSFCH resources in the slot occupy two symbols (a second-to-last symbol and a third-to-last symbol) in the slot, and the N1 first PSFCHs and the N2 second PSFCHs overlap in at least one of the two symbols. In this case, the time-domain overlap occurs.

In some embodiments, the terminal determines a priority value P1 corresponding to the highest priority in the N1 first PSFCHs, and a priority value P2 corresponding to the highest priority in the N2 second PSFCHs. In the case that P1 is less than P2, the first PSFCHs are determined to be transmitted. In the case that P1 is greater than P2, the second PSFCHs are determined to be received. The less the value of the priority, the higher the level of the priority. For example, a range of the value of the priority is [1, 8], a value 1 of the priority represents the highest priority, and a value 8 of the priority represents the lowest priority.

In some embodiments, the terminal determines a PSFCH with the highest priority in the N1 first PSFCHs and the N2 second PSFCHs. In the case that the PSFCH corresponds to the to-be-transmitted PSFCH, the first PSFCHs are determined to be transmitted. In the case that the PSFCH corresponds to the to-be-received PSFCH, the second PSFCHs are determined to be received. In the case that the PSFCHs with the highest priority includes at least two PSFCHs, and the at least two PSFCHs include the to-be-transmitted PSFCH and the to-be-received PSFCH, the terminal autonomously determines whether to transmit the first PSFCHs or receive the second PSFCHs.

Illustratively, as shown in FIG. 11, the terminal 131 achieves the SL communication with the terminal 132 over the beam 1, achieves communication with the terminal 133 and the terminal 134 over the beam 2, achieves the SL communication with the terminal 135 over the beam 3, and achieves the SL communication with the terminal 136 over the beam 4. Assuming that the terminal 131 includes three first PSFCHs (that is, to-be-transmitted PSFCHs) and four second PSFCHs (that is, to-be-received PSFCHs) overlapped in the time domain in the slot x, and thus the correspondence relationships of the beams and the PSFCHs are as follows:
beam 1: the first PSFCH#1, the first PSFCH#3;
beam 2: the second PSFCH#1, the second PSFCH#2,
beam 3: the second PSFCH#3, the second PSFCH#4; and
beam 4: the first PSFCH#2.

The values of the priorities of the first PSFCH#1, the first PSFCH#2, and the first PSFCH#3 are respectively 1, 3, and 3, and the values of the priorities of the second PSFCH#1, the second PSFCH#2, the second PSFCH#3, and the second PSFCH#4 are respectively 2, 3, 3, and 4.

As the priority value P1 of the highest priority of the three first PSFCHs is 1, the priority value P2 of the highest priority of the four second PSFCHs is 2, and P1 is less than P2, the terminal determines that the behavior in the slots x is transmitting the first PSFCHs. Alternatively, the priority value of the highest priority of the seven PSFCHs is 1 and corresponds to the first PSFCH, that is, the to-be-transmitted PSFCH, and thus the terminal determines that the behavior in the slots x is transmitting the first PSFCHs.

**In S740,** at least one of the N1 first PSFCHs is transmitted using a first spatial domain transmission filter in response to determining to transmit the first PSFCHs.

The first spatial domain transmission filter corresponds to the first transmission beam, and the first spatial domain transmission filter and the first transmission beam are construed as equivalent concepts or similar concepts in the embodiments of the present disclosure.

The first spatial domain transmission filter corresponds to a spatial domain transmission filter of one or more of the N1 first PSFCHs. Alternatively, the first spatial domain transmission filter corresponds to a spatial domain transmission filter of first PSFCHs with the same priority in the N1 first PSFCHs. In some embodiments, the first spatial domain transmission filter corresponds to a spatial domain transmission filter of a first PSFCH with a highest priority in the N1 first PSFCHs, and the first transmission beam corresponds to a first transmission beam of a first PSFCH with the highest priority in the N1 first PSFCHs.

By taking FIG. 11 as an example, as the first PSFCH#1 has the highest priority, the first transmission beam is the beam 1. The first spatial domain transmission filter is a spatial domain transmission filter corresponding to the first PSFCH#1 or the first PSFCH#3. Alternatively, the first spatial domain transmission filter corresponds to a spatial domain transmission filter of the first PSFCH with the priority value being 1. Alternatively, the first spatial domain transmission filter corresponds to a spatial domain transmission filter of the first PSFCH#1 with the highest priority in the N1 first PSFCHs.

In determining to transmit the first PSFCHs, the terminal transmits all or part of the N1 first PSFCHs over the first transmission beam. In some embodiments, the transmitted first PSFCHs are first PSFCHs corresponding to the first transmission beam.

The transmitted first PSFCHs are first PSFCHs corresponding to the first transmission beam in at least one of the following cases:
- any of the transmitted first PSFCHs, and the transmission beam corresponding to the any of the transmitted first PSFCHs is the first transmission beam;
- any of the transmitted first PSFCHs, and the transmission beam corresponding to the any of the transmitted first PSFCHs cover the first transmission beam; or
- any of the transmitted first PSFCHs, and the transmission beam corresponding to the any of the transmitted first PSFCHs are covered by the first transmission beam.

The first PSFCHs corresponding to the first transmission beam includes at least one of:
- first PSFCHs transmitted over the first transmission beam;
- first PSFCHs transmitted over the second transmission beam, and the second transmission beam covers the first transmission beam; or
- first PSFCHs transmitted over the first transmission beam, and the first transmission beam covers the second transmission beam.

In some embodiments, the PSFCH with the highest priority in the first PSFCHs is denoted as a first PSFCH y, and the first PSFCH y corresponds to the first transmission beam. In the case that a first PSFCH x corresponds to the second transmission beam, the second transmission beam covers the first transmission beam in the case that any of the following cases are met:
in case 1, an XdB beam band of the second transmission beam includes all beam peak value directions of the first transmission beam, wherein X is an integer, for example, X is equal to 3;
in case 2, the XdB beam band of the second transmission beam includes angles in a YdB beam band of the first transmission beam, wherein X and Y are integers, for example, X is equal to 3, and Y is equal to 3; or
in case 3, gain of the second transmission beam measured in a peak value direction is at least within the XdB of the gain of the first transmission beam, wherein X is an integer, for example, X is equal to 3.

It should be understood that in the above three cases, in the case that the first transmission beam and the second transmission beam are exchanged, the first transmission beam covers the second transmission beam, which is not repeated herein.

It should be noted that the above three cases are illustrative, and the second transmission beam covers the first transmission beam or the first transmission beam covers the second transmission beam in other specific cases, which are not limited in the present disclosure.

**In S760,** at least one of the N2 second PSFCHs is received using a first spatial domain reception filter in response to determining to receive the PSFCHs.

The first spatial domain reception filter corresponds to the first reception beam, and the first spatial domain reception filter and the first reception beam are construed as equivalent concepts or similar concepts in the embodiments of the present disclosure.

The first spatial domain reception filter corresponds to a spatial domain reception filter of one or more of the N2 second PSFCHs. Alternatively, the first spatial domain reception filter corresponds to a spatial domain reception filter of second PSFCHs with the same priority in the N2 second PSFCHs. In some embodiments, the first spatial domain reception filter corresponds to a spatial domain reception filter of a second PSFCH with a highest priority in the N2 second PSFCHs, and the first reception beam corresponds to a first reception beam of a second PSFCH with the highest priority in the N2 second PSFCHs.

Illustratively, as shown in FIG. 11, the terminal 131 achieves the SL communication with the terminal 132 over the beam 1, achieves communication with the terminal 133 and the terminal 134 over the beam 2, achieves the SL communication with the terminal 135 over the beam 3, and achieves the SL communication with the terminal 136 over the beam 4. Assuming that the terminal 131 includes four first PSFCHs and four second PSFCHs overlapped in the time domain in the slot x, and thus the correspondence relationships of the beams and the PSFCHs are as follows:
beam 1: the first PSFCH#1, the first PSFCH#3;
beam 2: the second PSFCH#1, the second PSFCH#2;
beam 3: the second PSFCH#3, the second PSFCH#4; and
beam 4: the first PSFCH#2, the first PSFCH#4.

The values of the priorities of the first PSFCH#1, the first PSFCH#2, the first PSFCH#3, and the first PSFCH#4 are both 3, and the values of the priorities of the second PSFCH#1, the second PSFCH#2, the second PSFCH#3, and the second PSFCH#4 are respectively 2, 3, 3, and 4.

As the priority value P1 of the highest priority of the four first PSFCHs is 3, the priority value P2 of the highest priority of the four second PSFCHs is 2, and P1 is greater than P2, the terminal determines that the behavior in the slots x is receiving the second PSFCHs. Alternatively, the priority value of the highest priority of the eight PSFCHs is 2 and corresponds to the second PSFCH, that is, the to-be-received PSFCH, and thus the terminal determines that the behavior in the slots x is receiving the second PSFCHs.

As the second PSFCH#1 has the highest priority, the first reception beam is the beam 2. The first spatial domain reception filter is a spatial domain reception filter corresponding to the second PSFCH#1 or the second PSFCH#2. Alternatively, the first spatial domain reception filter corresponds to the spatial domain reception filter of the second PSFCH#1 with the priority being 2. Alternatively, the first spatial domain reception filter corresponds to the spatial domain reception filter of the second PSFCH#1 with the highest priority in the N2 second PSFCHs.

In determining to receive the second PSFCHs, the terminal receives all or part of the N2 second PSFCHs over the first reception beam. In some embodiments, the received second PSFCHs are second PSFCHs corresponding to the first reception beam.

The received second PSFCHs are second PSFCHs corresponding to the first reception beam in at least one of the following cases:
- any of the received second PSFCHs, and the reception beam corresponding to the any of the received second PSFCHs is the first reception beam;
- any of the received second PSFCHs, and the reception beam corresponding to the any of the received second PSFCHs cover the first reception beam; or
- any of the received second PSFCHs, and the reception beam corresponding to the any of the received second PSFCHs are covered by the first reception beam.

The second PSFCHs corresponding to the first reception beam includes at least one of:
- second PSFCHs received over the first transmission beam;
- second PSFCHs received over the second reception beam, and the second reception beam covers the first reception beam; or
- second PSFCHs received over the first reception beam, and the first reception beam covers the second reception beam.

In some embodiments, the PSFCH with the highest priority in the second PSFCHs is denoted as a second PSFCH y, and the second PSFCH y corresponds to the first reception beam. In the case that a second PSFCH x corresponds to the second reception beam, the second reception beam covers the first reception beam in the case that any of the following cases are met:
in case 1, an XdB beam band of the second reception beam includes all beam peak value directions of the first reception beam, wherein X is an integer, for example, X is equal to 3;
in case 2, the XdB beam band of the second reception beam includes angles in a YdB beam band of the first reception beam, wherein X and Y are integers, for example, X is equal to 3, and Y is equal to 3; or
in case 3, a gain of the second reception beam measured in a peak value direction is at least within the XdB of the gain of the first reception beam, wherein X is an integer, for example, X is equal to 3.

It should be understood that in the above three cases, in the case that the first reception beam and the second reception beam are exchanged, the first reception beam covers the second reception beam, which is not repeated herein.

It should be noted that the above three cases are illustrative, and the second reception beam covers the first reception beam or the first reception beam covers the second reception beam in other specific cases, which are not limited in the present disclosure.

In summary, in the method according to the embodiments, for first PSFCHs and second PSFCHs that are conflicted, whether to transmit the first PSFCHs or to receive the second PSFCHs is determined based on priorities of PSFCHs. Then, one or more first PSFCHs are transmitted over a same transmission beam, or one or more second PSFCHs are received over a same reception beam. As the terminal generally supports one transmission beam or one reception beam at a given instant, the PSFCHs with some priorities (for example, a highest priority and/or higher priorities) are transmitted over a same beam in the SL communication process, such that the technical problem of the conflict between the first PSFCHs and the second PSFCHs is solved.

It should be noted that in some embodiments, in response to P1 being equal to P2, the terminal determines, based on an autonomous policy, to transmit the first PSFCHs or receive the second PSFCHs. The autonomous policy includes any one of:
- always determining to transmit the first PSFCHs;
- always determining to receive the second PSFCHs;
- randomly selecting to transmit the first PSFCHs or receive the second PSFCHs;
- determining to transmit the first PSFCHs in response to a first number being greater than a second number, wherein the first number is the number of first PSFCHs corresponding to the highest priority, and the second number is the number of second PSFCHs corresponding to the highest priority; or, the first number is the number of first PSFCHs corresponding to the first spatial domain transmission filter, and the second number is the number of second PSFCHs corresponding to the first spatial domain reception filter;
- determining to receive the second PSFCHs in response to the first number being greater than the second number;
- determining to transmit the first PSFCHs in response to the first number being less than the second number; or
- determining to receive the second PSFCHs in response to the first number being less than the second number.

Behavior 1: a case of determining to transmit the first PSFCHs.

In some embodiments, as shown in FIG. 12, S740 includes at least one of following processes in the case that the terminal determines to transmit the first PSFCHs.

**In S742,** the first spatial domain transmission filter corresponding to the first PSFCH with a highest priority in response to determining to transmit the first PSFCHs.

The terminal determines the first spatial domain transmission filter of the first PSFCH with the highest priority from the N1 first PSFCHs in response to determining to transmit the first PSFCHs. That is, the terminal determines the first transmission beam corresponding to the first PSFCH with the highest priority.

In some embodiments, at least two first PSFCHs with the highest priority are defined. In the case that candidate transmission beams corresponding to the at least two first PSFCHs are different, the first transmission beam is a target transmission beam corresponding to a target first PSFCH, or the first spatial domain transmission filter is a target spatial domain transmission filter corresponding to a target first PSFCH. A policy for selecting the target first PSFCH includes any one of:
policy 1: the target first PSFCH is randomly selected from the at least two first PSFCHs with the highest priority; or
policy 2: the target first PSFCH is one of the at least two first PSFCHs with the highest priority, and the number of first PSFCHs corresponding to the target transmission beam is greatest in numbers of the first PSFCHs corresponding to the candidate transmission beams. That is, the target first PSFCH is one of the at least two first PSFCHs with the highest priority, and the number of first PSFCHs corresponding to the target spatial domain transmission filter is greatest in numbers of the first PSFCHs corresponding to the candidate spatial domain transmission filters.

Illustratively, as shown in FIG. 11, the terminal 131 achieves the SL communication with the terminal 132 over the beam 1, achieves communication with the terminal 133 and the terminal 134 over the beam 2, achieves the SL communication with the terminal 135 over the beam 3, and achieves the SL communication with the terminal 136 over the beam 4. Assuming that the terminal 131 includes three first PSFCHs (that is, to-be-transmitted PSFCHs) and four second PSFCHs (that is, to-be-received PSFCHs) overlapped in the time domain in the slot x, and thus the correspondence relationships of the beams and the PSFCHs are as follows:
beam 1: the first PSFCH#1, the first PSFCH#3;
beam 2: the second PSFCH#1, the second PSFCH#2;
beam 3: the second PSFCH#3, the second PSFCH#4; and
beam 4: the first PSFCH#2.

The values of the priorities of the first PSFCH#1, the first PSFCH#2, and the first PSFCH#3 are respectively 1, 1, and 3, and the values of the priorities of the second PSFCH#1, the second PSFCH#2, the second PSFCH#3, and the second PSFCH#4 are respectively 2, 3, 3, and 4.

As the priority value P1 of the highest priority of the three first PSFCHs is 1, the priority value P2 of the highest priority of the four second PSFCHs is 2, and P1 is less than P2, the terminal determines that the behavior in the slots x is transmitting the first PSFCHs. The PSFCH#1 with the highest priority corresponds to the beam 1, and the PSFCH#2 with the highest priority corresponds to the beam 4.

In policy 1, the first transmission beam is randomly selected from the beam 1 and the beam 4. In policy 2, as the beam 1 corresponds to two first PSFCHs, and the beam 4 corresponds to one first PSFCH, the beam 1 is selected as the first transmission beam.

**In S744,** *N*_{Tx,PSFCH} first PSFCHs are determined from the N1 first PSFCHs using the first spatial domain transmission filter.

The terminal determines *N*_{Tx,PSFCH} first PSFCHs corresponding to the first spatial domain transmission filter from the N1 first PSFCHs. *N*_{Tx,PSFCH} is a positive integer not greater than N1. That is, the terminal determines *N*_{Tx,PSFCH} first PSFCHs corresponding to the first transmission beam from the N1 first PSFCHs.

In the embodiments, the first PSFCHs corresponding to the first spatial domain transmission filter include at least one of: first PSFCHs that need to be transmitted using the first spatial domain transmission filter; first PSFCHs that need to be transmitted using the second spatial domain transmission filter, wherein the second spatial domain transmission filter covers the first spatial domain transmission filter; first PSFCHs that need to be transmitted using the second spatial domain transmission filter, wherein the first spatial domain transmission filter covers the second spatial domain transmission filter; first PSFCHs that need to be transmitted using the second spatial domain transmission filter, wherein a filtered signal range of the second spatial domain transmission filter covers a filtered signal range of the first spatial domain transmission filter; or first PSFCHs that need to be transmitted using the second spatial domain transmission filter, wherein a filtered signal range of the first spatial domain transmission filter covers a filtered signal range of the second spatial domain transmission filter.

In some embodiments, the terminal determines ${N}_{sch , Tx , PSFCH}^{′}$ first PSFCHs corresponding to the first spatial domain transmission filter from the N1 first PSFCHs, and determines the *N*_{Tx,PSFCH} first PSFCHs from the ${N}_{sch , Tx , PSFCH}^{′}$ first PSFCHs. ${N}_{sch , Tx , PSFCH}^{′}$ first PSFCHs include all first PSFCHs corresponding to the first spatial domain transmission filter in the N1 first PSFCHs. *N*_{Tx,PSFCH} is less than or equal to ${N}_{sch , Tx , PSFCH}^{′} , {N}_{sch , Tx , PSFCH}^{′}$ less than or equal to N1.

For example, the number ${N}_{sch , Tx , PSFCH}^{′}$ of all first PSFCHs corresponding to the first spatial domain transmission filter is five, and the number *N*_{Tx,PSFCH} of eventually transmitted first PSFCHs is three.

*N*_{Tx,PSFCH} first PSFCHs include the first PSFCHs with the highest priority. In some embodiments, the *N*_{Tx,PSFCH} first PSFCHs only include the first PSFCHs with the highest priority. Alternatively, the *N*_{Tx,PSFCH} first PSFCHs include a plurality of first PSFCHs the priorities in an order from highest to lowest.

A priority value of any of the *N*_{Tx,PSFCH} first PSFCHs is less than or equal to a priority value of not transmitted first PSFCHs in the ${N}_{sch , Tx , PSFCH}^{′}$ first PSFCHs. Not transmitted first PSFCHs in the ${N}_{sch , Tx , PSFCH}^{′}$ first PSFCHs are first PSFCHs other than *N*_{Tx,PSFCH} first PSFCHs in the ${N}_{sch , Tx , PSFCH}^{′}$ first PSFCHs.

**In S746,** the *N*_{Tx,PSFCH} first PSFCHs are transmitted using the first spatial domain transmission filter.

The terminal transmits the *N*_{Tx,PSFCH} first PSFCHs using the first spatial domain transmission filter. All *N*_{Tx,PSFCH} first PSFCHs are transmitted using the first spatial domain transmission filter. Alternatively, all spatial domain transmission filters corresponding to the *N*_{Tx,PSFCH} first PSFCHs are the first spatial domain transmission filter. Alternatively, all *N*_{Tx,PSFCH} first PSFCHs are transmitted over the first transmission beam. Alternatively, all transmission beams corresponding to the *N*_{Tx,PSFCH} first PSFCHs are the first transmission beam.

As the terminal generally supports one transmission beam at a same time, the terminal determines the first transmission beam based on the first PSFCH with the highest priority, and transmits the plurality of first PSFCHs corresponding to the first transmission beam, such that the plurality of first PSFCHs (including the first PSFCH with the highest priority) corresponding to the first transmission beam are transmitted first.

In some embodiments, for S744, the terminal determines the *N*_{Tx,PSFCH} first PSFCHs from the ${N}_{sch , Tx , PSFCH}^{′}$ first PSFCHs based on first information. The first information includes at least one of:
- **the priorities of the first PSFCHs.** Illustratively, priorities of different first PSFCHs are the same or different, and the first PSFCHs with higher priorities are transmitted first.
- **a maximum number *N*_{max*,PSFCH*} of simultaneously transmitted first PSFCHs.** The number of the first PSFCH simultaneously transmitted by the terminal at the same time or over the same transmission beam has an upper limit, and the upper limit is represented by the maximum number. *N*_{Tx,PSFCH} is less than or equal to *N*_{max*,PSFCH*}, and *N*_{max*,PSFCH*} is a positive integer and is determined based on a capability of the UE of the terminal,
- a **maximum transmit power *P*_{CMAX}**. *P*_{CMAX} represents a maximum transmit power determined based on the level or type of the terminal, or represents a maximum transmit power of the terminal in the resource pool. In some embodiments, in the case that *P*_{CMAX} represents a maximum transmit power of the terminal in the resource pool, the parameter is determined based on resource pool configuration parameter sl-MaxTransPower; or
- **indication information indicating whether to perform power control based on a downlink path loss.** The network side indicates the terminal by the parameter dl-P0-PSFCH whether to perform power control for the PSFCH based on the downlink path loss. In the case that the network side is configured with the parameter, the power control is performed based on the downlink path loss. In the case that the network side is not configured with the parameter, the power control is not performed based on the downlink path loss.

In the SL system, the power control for the PSFCH based on the SL path loss is not supported currently. In the case that the power control for the PSFCH based on the SL path loss is supported, the downlink path loss involved in the present disclosure is replaceable with the SL path loss, and the power control for the PSFCH based on the downlink path loss involved in the present disclosure is replaceable with the power control for the PSFCH based on the SL path loss.

In some embodiments, the network side is not configured with the power control for the first PSFCH based on the downlink path loss.

In the case that the network side is not configured with the power control for the PSFCH based on the downlink path loss, the network side is not configured with the parameter dl-P0-PSFCH. In this case, the terminal does not need to perform the power control for the PSFCH based on the downlink path loss. The terminal determines the *N*_{Tx,PSFCH} first PSFCHs based on the first information using at least one of the following two approaches:
In Approach 1, the terminal selects the *N*_{Tx,PSFCH} first PSFCHs from the ${N}_{sch , Tx , PSFCH}^{′}$ first PSFCHs based on the priorities in an order from highest to lowest in response to the power control based on the downlink path loss being not configured.

*N*_{Tx,PSFCH} is greater than or equal to 1, and *N*_{Tx,PSFCH} is not greater than *N*_{max,*PSFCH*}.

In some embodiments, *N*_{Tx,PSFCH} is a value determined by the terminal, for example, a value determined based on the channel quality by the terminal.

In some embodiments, *N*_{Tx,PSFCH} is a predetermined value.

In some embodiments, in the case that ${N}_{sch , Tx , PSFCH}^{′}$ is less than or equal to *N*_{max*,PSFCH*}, *N*_{Tx,PSFCH} is equal to ${N}_{sch , Tx , PSFCH}^{′}$.

In some embodiments, the terminal further determines that each of the first PSFCHs has a same transmit power, and meets: ${P}_{PSFCH} = {P}_{CMAX} - 10 {log}_{10} \left({N}_{Tx {′}^{PSFCH}}\right) \left[dBm\right]$ Formula (1).

*P*_{PSFCH} is the transmit power of each of the first PSFCHs in Approach 1, and the operation symbol log₁₀(*X*) is the base 10 logarithm of X.

In Approach 2, the terminal selects the *N*_{max*,PSFCH*} first PSFCHs from the ${N}_{sch , Tx , PSFCH}^{′}$ first PSFCHs based on the priorities in an order from highest to lowest in response to the power control based on the downlink path loss being not configured.

Illustratively, in the case that the ${N}_{sch , Tx , PSFCH}^{′}$ is greater than or equal to *N*ₘₐₓ*_{,PSFCH}, N*_{Tx,PSFCH} is equal to *N*_{max*,PSFCH*}.

In some embodiments, the terminal further determines that each of the first PSFCHs has a same transmit power, and meets: ${P}_{PSFCH} = {P}_{CMAX} - 10 {log}_{10} \left({N}_{max {′}^{PSFCH}}\right) \left[dBm\right]$ Formula (2).

In some embodiments, *N*_{Tx,PSFCH} meets the condition: ${N}_{Tx , PSFCH} = min \left({N}_{sch , Tx , PSFCH}^{′}, {N}_{max , PSFCH}\right)$.

It should be noted that in the process of selecting *N*_{Tx,PSFCH} or *N*_{max,*PSFCH*} first PSFCHs from the ${N}_{sch , Tx , PSFCH}^{′}$ first PSFCHs by the terminal, all priorities values of the selected first PSFCHs are less than or equal to priorities values of the unselected first PSFCHs in the ${N}_{sch , Tx , PSFCH}^{′}$ first PSFCHs.

In some embodiments, the network side is configured with the power control for the first PSFCH based on the downlink path loss.

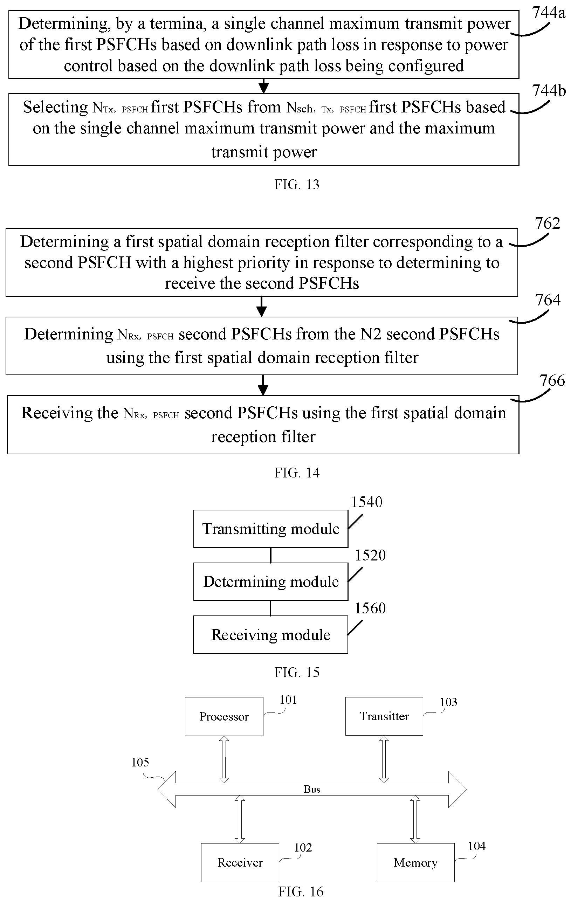

In the case that the network side is configured with the power control for the first PSFCH based on the downlink path loss, that is, the network side is configured with the parameter dl-P0-PSFCH, the terminal requires to perform the power control for the first PSFCH based on the downlink path loss. As shown in FIG. 13, S744 includes the following processes.

**In S744a,** the terminal determines a single channel maximum transmit power *P_{PSFCH,one}* of the first PSFCHs based on the downlink path loss in response to the power control based on the downlink path loss being configured.

The single channel maximum transmit power is determined based on a parameter for performing the power control based on the downlink path loss, a downlink path loss compensation factor, an estimated downlink path loss, and a sub-carrier spacing parameter.

Illustratively, the terminal determines the single channel maximum transmit power of the first PSFCHs by the following formula: ${P}_{PSFCH , one} = {P}_{O_PSFCH} + 10 {log}_{10} \left({2}^{μ}\right) + {α}_{PSFCH} ⋅ {PL}_{D} \left[dBm\right]$ Formula (3).

In the above formula: *P*_{O_PSFCH} represents a parameter configured by a high layer signaling for performing the power control based on the downlink path loss, that is, dl-P0-PSFCH, or is determined based on the high layer signaling configuration parameter dl-P0-PSFCH. *α_{PSFCH}* represents a downlink path loss compensation factor configured by the high layer signaling for performing the power control for the first PSFCHs. For example, *α_{PSFCH}* is a high layer configuration parameter dl-Alpha-PSFCH. In the case that dl-Alpha-PSFCH is not configured, a value of *α_{PSFCH}* is 1. *PL_{D}* represents the downlink path loss estimated by a terminal. µ is determined based on a sub-carrier spacing parameter. As shown in Table 1:

**Table 1**

| *µ* | Sub-carrier spacing Δf = 2*^{µ}* * 15[*kHz*] |
|---|---|
| 0 | 15 |
| 1 | 30 |
| 2 | 60 |
| 3 | 120 |
| 4 | 240 |

In the case that the terminal transmits the first PSFCHs, the transmit power of each of the first PSFCHs is not greater than *P_{PSFCH,one}*.

**In S744b,** the *N*_{Tx,PSFCH} first PSFCHs are selected from the ${N}_{sch , Tx , PSFCH}^{′}$ first PSFCHs based on the single channel maximum transmit power *P_{PSFCH,one}* and the maximum transmit power *P*_{CMAX}.

The terminal determines a number *N*_{Tx,*PSFCH*} of actually transmitted first PSFCHs according to the principles: each of the first PSFCHs has a same transmit power and is not greater than *P_{PSFCH,one}*, and a total transmit power of the *N*_{Tx,PSFCH} first PSFCHs is not greater than the maximum transmit power *P*_{CMAX}. In the case that the total transmit power is greater than the maximum transmit power *P*_{CMAX}, the terminal determines *N*_{Tx,PSFCH} first PSFCHs from the ${N}_{sch , Tx , PSFCH}^{′}$ first PSFCHs based on the priorities of the first PSFCHs.

That is, the terminal selects the *N*_{Tx,PSFCH} first PSFCHs in the order from highest to lowest from the ${N}_{sch , Tx , PSFCH}^{′}$ first PSFCHs based on selection conditions. The selection conditions include at least one of the following conditions:
- a total transmit power of the *N*_{Tx,PSFCH} first PSFCHs being not greater than the maximum transmit power *P*_{CMAX};
- a transmit power of each of the first PSFCHs being not greater than the single channel maximum transmit power *P_{PSFCH,one}*; or
- *N*_{Tx,PSFCH} being less than or equal to $min \left({N}_{sch , Tx , PSFCH}^{′}, {N}_{max , PSFCH}\right)$.

In some embodiments, the terminal selects and transmits *N*_{Tx,PSFCH} first PSFCHs in the following approaches:

**1. In the case that** ${N}_{sch , Tx , PSFCH}^{′} \leq {N}_{max , PSFCH}$:

**In Approach A,** the ${N}_{sch , Tx , PSFCH}^{′}$ first PSFCHs are selected in response to ${N}_{sch , Tx , PSFCH}^{′}$ being less than or equal to *N*_{max,PSFCH} and a total transmit power of the ${N}_{sch , Tx , PSFCH}^{′}$ first PSFCHs being not greater than the maximum transmit power *P*_{CMAX}.

In the case that ${N}_{sch , Tx , PSFCH}^{′} \leq {N}_{max , PSFCH}$, and ${P}_{PSFCH , one} + 10 {log}_{10} \left({N}_{sch , Tx , PSFCH}^{′}\right) \leq {P}_{CMAX}$, that is, in the case that the transmit power *P_{PSFCH}* of each of the first PSFCHs is set as *P_{PSFCH,one}*, and the total transmit power is not greater than the maximum transmit power *P*_{CMAX}, ${N}_{Tx , PSFCH} = {N}_{sch , Tx , PSFCH}^{′}$ Formula (4); ${P}_{PSFCH} = {P}_{PSFCH , one} \left[dBm\right]$ Formula (5).

It can be seen from the formula (5) that in selected ${N}_{sch , Tx , PSFCH}^{′}$ first PSFCHs, the terminal determines the transmit power of each of the first PSFCHs as the single channel maximum transmit power.

**In Approach B,** the *N*_{Tx,PSFCH} first PSFCHs are selected from the ${N}_{sch , Tx , PSFCH}^{′}$ first PSFCHs based on the priorities in an order from highest to lowest in response to ${N}_{sch , Tx , PSFCH}^{′}$ being less than or equal to *N*_{max,PSFCH} and a total transmit power of the ${N}_{sch , Tx , PSFCH}^{′}$ first PSFCHs being greater than the maximum transmit power.

In the case that ${N}_{sch , Tx , PSFCH}^{′} \leq {N}_{max , PSFCH}$, and ${P}_{PSFCH , one} + 10 {log}_{10} \left({N}_{sch , Tx , PSFCH}^{′}\right) > {P}_{CMAX}$, that is, in the case that the transmit power *P_{PSFCH}* of each of the first PSFCHs is set as *P_{PSFCH,one}*, and the total transmit power of the ${N}_{sch , Tx , PSFCH}^{′}$ first PSFCHs is greater than the maximum transmit power *P*_{CMAX}, ${N}_{Tx , PSFCH} \geq max \left(1, {\sum }_{i = 1}^{K} {M}_{i}\right)$. *Mᵢ* represents the number of first PSFCHs with a priority i in the ${N}_{sch , Tx , PSFCH}^{′}$ first PSFCHs, and K is determined in the following way:
in the case that at least one K meets: ${P}_{PSFCH , one} + 10 {log}_{10} \left(max\left(1, {\sum }_{i = 1}^{K} {M}_{i}\right)\right) \leq {P}_{CMAX}$, K correspondingly meets a maximum of ${P}_{PSFCH , one} + 10 {log}_{10} \left(max\left(1, {\sum }_{i = 1}^{K} {M}_{i}\right)\right) \leq {P}_{CMAX}$, and otherwise K is equal to 0;
in the case that K is equal to 0, ${\sum }_{i = 1}^{K} {M}_{i} = 0$, and *N*_{Tx,PSFCH} ≥ 1. That is, the terminal selects at least one first PSFCH. That is, the terminal selects at least one first PSFCH from A first PSFCHs with the highest priority. That is, *A* ≥ *N*_{Tx,PSFCH} ≥ 1.

Upon selecting *N*_{Tx,PSFCH} first PSFCHs, the terminal determines the transmit power of each of the first PSFCHs by: ${P}_{PSFCH} = min \left({P}_{CMAX}-10{log}_{10}\left({N}_{Tx , PSFCH}\right),{P}_{PSFCH , one}\right) \left[dBm\right]$ Formula (6).

**2. In the case that** ${N}_{sch , Tx , PSFCH}^{′} > {N}_{max , PSFCH}$:

The terminal selects *N*_{max,PSFCH} first PSFCHs with the highest priority from the ${N}_{sch , Tx , PSFCH}^{′}$ first PSFCHs based on the priorities of the ${N}_{sch , Tx , PSFCH}^{′}$ first PSFCHs in an order from highest to lowest, and then selects *N*_{Tx,PSFCH} first PSFCHs from the *N*_{max,PSFCH} first PSFCHs. In particular:
**In Approach C,** in the case that ${N}_{sch , Tx , PSFCH}^{′}$ is greater than *N*_{max,PSFCH}, *N*_{max,PSFCH} first PSFCHs are selected from the ${N}_{sch , Tx , PSFCH}^{′}$ first PSFCHs based on the priorities in an order from highest to lowest; and in the case that the total transmit power of the *N*_{max,PSFCH} first PSFCHs is not greater than the maximum transmit power, the *N*_{max,PSFCH} first PSFCHs are selected.

In the case that ${N}_{sch , Tx , PSFCH}^{′} > {N}_{max , PSFCH}$, and *P_{PSFCH,one}* + 10log₁₀(*N*_{max,PSFCH}) ≤ *P*_{CMAX}, that is, in the case that in the case that the transmit power *P_{PSFCH}* of each of the first PSFCHs is set as *P_{PSFCH,one}*, and the total transmit power of the *N*_{max,PSFCH} first PSFCHs is not greater than the maximum transmit power *P*_{CMAX}, ${N}_{Tx , PSFCH} = {N}_{max , PSFCH}$ Formula (7); ${P}_{PSFCH} = {P}_{PSFCH , one} \left[dBm\right]$ Formula (8).

It can be seen from the formula (8) that in selected *N_{max,PSFCH}* first PSFCHs, the terminal determines the transmit power of each of the first PSFCHs as the single channel maximum transmit power.

**In Approach D,** the *N_{max,PSFCH}* first PSFCHs are selected from the ${N}_{sch , Tx , PSFCH}^{′}$ first PSFCHs based on the priorities in an order from highest to lowest in response to ${N}_{sch , Tx , PSFCH}^{′}$ being greater than *N_{max,PSFCH}*; and the *N*_{Tx,PSFCH} first PSFCHs are selected from the *N_{max,PSFCH}* first PSFCHs based on the priorities in the order from highest to lowest in response to a total transmit power of the *N_{max,PSFCH}* first PSFCHs being greater than the maximum transmit power.

In the case that ${N}_{sch , Tx , PSFCH}^{′} > {N}_{max , PSFCH}$, and *P_{PSFCH,one}* + 10log₁₀(*N*_{max,PSFCH}) > *P*_{CMAX}, that is, in the case that the transmit power *P_{PSFCH}* of each of the first PSFCHs is set as *P_{PSFCH,one}*, and the total transmit power of the *N*_{max,PSFCH} first PSFCHs is greater than the maximum transmit power *P*_{CMAX}, ${N}_{Tx , PSFCH} \geq max \left(1, {\sum }_{i = 1}^{K} {M}_{i}\right)$.

*Mᵢ* represents the number of first PSFCHs with a priority i in the ${N}_{sch , Tx , PSFCH}^{′}$ first PSFCHs, or *Mᵢ* represents the number of first PSFCHs with a priority i in the *N_{max,PSFCH}* first PSFCHs, and K is determined by the following method:
in the case that at least one K meets: ${P}_{PSFCH , one} + 10 {log}_{10} \left(max\left(1, {\sum }_{i = 1}^{K} {M}_{i}\right)\right) \leq {P}_{CMAX}$, K correspondingly meets a maximum of ${P}_{PSFCH , one} + 10 {log}_{10} \left(max\left(1, {\sum }_{i = 1}^{K} {M}_{i}\right)\right) \leq {P}_{CMAX}$, and otherwise K is equal to 0;
in the case that K is equal to 0, ${\sum }_{i = 1}^{K} {M}_{i} = 0$, and *N*_{Tx,PSFCH} ≥ 1. That is, the terminal selects at least one first PSFCH. That is, the terminal selects at least one first PSFCH from A first PSFCHs with the highest priority. That is, *A* ≥ *N*_{Tx,PSFCH} ≥ 1.

Upon selecting *N*_{Tx,PSFCH} first PSFCHs, the terminal determines the transmit power of each of the first PSFCHs by: ${P}_{PSFCH} = min \left({P}_{CMAX}-10{log}_{10}\left({N}_{Tx , PSFCH}\right),{P}_{PSFCH , one}\right) \left[dBm\right]$ Formula (9).

In some embodiments, in the case that *N*_{Tx,PSFCH} simultaneously meets the following four first conditions:
1 ${N}_{Tx , PSFCH} = {N}_{sch , Tx , PSFCH}^{′}$;
2 *N*_{Tx,PSFCH} < N1;
3 *N*_{Tx,PSFCH} < *N*_{max,PSFCH}; and
4 the total transmit power of the *N*_{Tx,PSFCH} PSFCHs is less than *P*_{CMAX},

the terminal selects first PSFCHs from the N1 first PSFCHs (not including already selected ${N}_{sch , Tx , PSFCH}^{′}$ first PSFCHs) based on the priorities in an order from highest to lowest until a maximum number of first PSFCHs meeting the following three second conditions are selected, and transmits all selected first PSFCHs using the first spatial domain transmission filter. The three second conditions are:
1 *N*_{Tx,PSFCH};
2 *N*_{Tx,PSFCH} ≤ *N*_{max,PSFCH}; and
3 the total transmit power of the *N*_{Tx,PSFCH} PSFCHs is less than or equal to *P*_{CMAX}.

In some embodiments, in the above selected first PSFCHs, the transmit powers of the selected first PSFCHs other than the ${N}_{sch , Tx , PSFCH}^{′}$ first PSFCHs corresponding to the first spatial domain transmission filter are *P*_{PSFCH,one}.

In some embodiments, as shown in FIG. 14, S760 includes at least one of following processes in the case that the terminal determines to receive the second PSFCHs.

**In S762,** the first spatial domain reception filter corresponding to the second PSFCH with a highest priority is determined in response to determining to receive the second PSFCHs.

The terminal determines the first spatial domain reception filter of the second PSFCH with the highest priority from the N2 second PSFCHs in response to determining to receive the second PSFCHs. That is, the terminal determines the first reception beam corresponding to the second PSFCH with the highest priority.

In some embodiments, at least two second PSFCHs with the highest priority are defined. In the case that candidate reception beams corresponding to the at least two second PSFCHs are different, the first reception beam is a target reception beam corresponding to a target second PSFCH, or the first spatial domain reception filter is a target spatial domain reception filter corresponding to a target second PSFCH. A policy for selecting the target second PSFCH includes any one of:
- policy 1: the target second PSFCH is randomly selected from the at least two second PSFCHs with the highest priority; or
- policy 2: the target second PSFCH is one of the at least two second PSFCHs with the highest priority, and the number of second PSFCHs corresponding to the target reception beam is greatest in numbers of the second PSFCHs corresponding to the candidate reception beams. That is, the target second PSFCH is one of the at least two second PSFCHs with the highest priority, and the number of second PSFCHs corresponding to the target spatial domain reception filter is greatest in numbers of the second PSFCHs corresponding to the candidate spatial domain reception filters.

**In S764,** *N*_{Rx,PSFCH} second PSFCHs are determined from the N2 second PSFCHs using the first spatial domain reception filter.

The terminal determines *N*_{Rx,PSFCH} second PSFCHs corresponding to the first spatial domain reception filter from the N2 second PSFCHs. *N*_{Rx,PSFCH} is a positive integer not greater than N2. That is, the terminal determines *N*_{Rx,PSFCH} second PSFCHs corresponding to the first reception beam from the N2 second PSFCHs.

In the embodiments, the second PSFCHs corresponding to the first spatial domain reception filter include at least one of: second PSFCHs that need to be received using the first spatial domain reception filter; second PSFCHs that need to be received using the second spatial domain reception filter, wherein the second spatial domain reception filter covers the first spatial domain reception filter; second PSFCHs that need to be received using the second spatial domain reception filter, wherein the first spatial domain reception filter covers the second spatial domain reception filter; second PSFCHs that need to be received using the second spatial domain reception filter, wherein a filtered signal range of the second spatial domain reception filter covers a filtered signal range of the first spatial domain reception filter; or second PSFCHs that need to be received using the second spatial domain reception filter, wherein a filtered signal range of the first spatial domain reception filter covers a filtered signal range of the second spatial domain reception filter.

In some embodiments, the terminal determines ${N}_{sch , Rx , PSFCH}^{′}$ second PSFCHs corresponding to the first spatial domain reception filter from the N2 second PSFCHs, and determines the *N*_{Rx,PSFCH} second PSFCHs from the ${N}_{sch , Rx , PSFCH}^{′}$ second PSFCHs. ${N}_{sch , Rx , PSFCH}^{′}$ second PSFCHs include all second PSFCHs corresponding to the first spatial domain reception filter in the N2 second PSFCHs. *N*_{Rx,PSFCH} is less than or equal to ${N}_{sch , Rx , PSFCH}^{′}$.

For example, the number ${N}_{sch , Rx , PSFCH}^{′}$ of all second PSFCHs corresponding to the first spatial domain reception filter is five, and a number *N*_{Tx,PSFCH} of eventually received second PSFCHs is three.

*N_{Rx,PSFCH}* second PSFCHs include the second PSFCHs with the highest priority. In some embodiments, the *N_{Rx,PSFCH}* second PSFCHs only include the second PSFCHs with the highest priority. Alternatively, the *N*_{Rx,PSFCH} second PSFCHs include a plurality of second PSFCHs of the priorities in an order from highest to lowest.

A priority value of any of the *N*_{Rx,PSFCH} second PSFCHs is less than or equal to a priority value of not received second PSFCHs in the ${N}_{sch , Rx , PSFCH}^{′}$ second PSFCHs. Not received second PSFCHs in the ${N}_{sch , Rx , PSFCH}^{′}$ second PSFCHs are second PSFCHs other than *N*_{Rx,PSFCH} second PSFCHs in the ${N}_{sch , Rx , PSFCH}^{′}$ second PSFCHs.

In some embodiments, the terminal determines the *N*_{Rx,PSFCH} second PSFCHs from the *N*_{Rx,PSFCH} second PSFCHs based on second information. The second information includes at least one of:
- the priorities of the second PSFCHs.
- a maximum number *N*_{max,Rx,PSFCH} of simultaneously received second PSFCHs.

The maximum number *N*_{max,Rx,PSFCH} is determined based on a capability of the UE of the terminal, and is a positive integer.

Illustratively, the terminal determines the *N*_{Rx,PSFCH} second PSFCHs from the ${N}_{sch , Rx , PSFCH}^{′}$ second PSFCHs based on second information in at least one of the following approaches:
- in the case that ${N}_{sch , Rx , PSFCH}^{′}$ is less than *N*_{max,Rx,PSFCH}, the terminal determines all of the ${N}_{sch , Rx , PSFCH}^{′}$ second PSFCHs as the *N*_{Rx,PSFCH} second PSFCHs. In the case that a number ${N}_{sch , Rx , PSFCH}^{′} {N}_{sch , Rx , PSFCH}^{′}$ of second PSFCHs corresponding to the first reception beam is less than *N*_{max,Rx,PSFCH}, ${N}_{{}^{Rx , PSFCH}} = {N}_{sch , Rx , PSFCH}^{′}$, and thus the terminal receives all of the ${N}_{sch , Rx , PSFCH}^{′}$ second PSFCHs;
- in the case that ${N}_{sch , Rx , PSFCH}^{′}$ is less than *N*_{max,Rx,PSFCH}, the terminal selects *N*_{max,RX,PSFCH} second PSFCHs from the ${N}_{sch , Rx , PSFCH}^{′}$ second PSFCHs based on the priorities in an order from highest to lowest, and determines the *N*ₘₐₓ,_{RX,PSFCH} second PSFCHs as the *N*_{Rx,PSFCH} second PSFCHs. In the case that a number ${N}_{sch , Rx , PSFCH}^{′} {N}_{sch , Rx , PSFCH}^{′}$ of second PSFCHs corresponding to the first reception beam is greater than *N*_{max,Rx,PSFCH}, the terminal selects *N*_{Rx*,PSFCH*} = *N*_{max,RX,PSFCH} second PSFCHs from the ${N}_{sch , Rx , PSFCH}^{′}$ to-be-received second PSFCHs based on the priorities in the order from highest to lowest, and all priorities values of the selected *N*_{Rx*,PSFCH*} second PSFCHs are less than or equal to priorities values of the unselected second PSFCHs in the ${N}_{sch , Rx , PSFCH}^{′}$ second PSFCHs.

**In S766,** the *N*_{Rx,PSFCH} second PSFCHs are received using the first spatial domain reception filter.

The terminal receives the *N*_{Rx,PSFCH} second PSFCHs using the first spatial domain reception filter. All *N*_{Rx,PSFCH} second PSFCHs are received using the first spatial domain reception filter. Alternatively, all spatial domain reception filters corresponding to the *N*_{Rx,PSFCH} second PSFCHs are the first spatial domain reception filter. Alternatively, all *N*_{Rx,PSFCH} second PSFCHs are received over the first reception beam. Alternatively, all reception beams corresponding to the *N*_{Rx,PSFCH} second PSFCHs are the first reception beam.

As the terminal generally supports one reception beam at a same time, the terminal determines the first reception beam based on the second PSFCH with the highest priority, and receives the plurality of second PSFCHs corresponding to the first reception beam, such that the plurality of second PSFCHs (including the second PSFCH with the highest priority) corresponding to the first reception beam is received first.

FIG. 15 is a block diagram of an apparatus for transmitting sidelink feedback channels according to some embodiments of the present disclosure. The apparatus is implemented as all or part of the terminal, or is applicable to the terminal. The terminal includes:
a determining module 1520, configured to: in a case that N1 first sidelink feedback channels and N2 second sidelink feedback channels overlap in a time domain, determine, based on priorities of the N1 first sidelink feedback channels and priorities of the N2 second sidelink feedback channels, to transmit the first sidelink feedback channels or receive the second sidelink feedback channels, wherein N1 and N2 are both positive integers;
a transmitting module 1540, configured to transmit at least one of the N1 first sidelink feedback channels using a first spatial domain transmission filter in response to determining to transmit the first sidelink feedback channels; and
a receiving module 1560, configured to receive at least one of the N2 second sidelink feedback channels using a first spatial domain reception filter in response to determining to receive the second sidelink feedback channels;
wherein the N1 first sidelink feedback channels are sidelink feedback channels for transmission, the N2 second sidelink feedback channels are sidelink feedback channels for reception, the first spatial domain transmission filter corresponds to a spatial domain transmission filter of one of the N1 first sidelink feedback channels, and the first spatial domain reception filter corresponds to a spatial domain reception filter of one of the N2 second sidelink feedback channels.

In some embodiments, the determining module 1520 is further configured to: determine a priority value P1 corresponding to a highest priority of the N1 first sidelink feedback channels and a priority value P2 corresponding to a highest priority of the N2 second sidelink feedback channels, wherein P1 and P2 are both integers; determine to transmit the first sidelink feedback channels in response to the priority value P1 being less than the priority value P2; and determine to receive the second sidelink feedback channels in response to the priority value P1 being greater than the priority value P2.

In some embodiments, the determining module 1520 is further configured to: in response to the priority value P1 being equal to the priority value P2, determine, based on an autonomous policy, to transmit the first sidelink feedback channels or receive the second sidelink feedback channels, wherein
the autonomous policy includes at least one of:
   - always determining to transmit the first sidelink feedback channels;
   - always determining to receive the second sidelink feedback channels;
   - randomly selecting to transmit the first sidelink feedback channels or receive the N2 second sidelink feedback channels;
   - determining to transmit the first sidelink feedback channels in response to a first number being greater than a second number;
   - determining to receive the second sidelink feedback channels in response to the first number being greater than the second number;
   - determining to transmit the first sidelink feedback channels in response to the first number being less than the second number; and
   - determining to receive the second sidelink feedback channels in response to the first number being less than the second number;
wherein the first number is the number of first sidelink feedback channels corresponding to the highest priority, and the second number is the number of second sidelink feedback channels corresponding to the highest priority; or, the first number is the number of first sidelink feedback channels corresponding to the first spatial domain transmission filter, and the second number is the number of second sidelink feedback channels corresponding to the first spatial domain reception filter.

In some embodiments, the determining module 1520 is further configured to: determine the first spatial domain transmission filter corresponding to the first sidelink feedback channel with a highest priority in response to determining to transmit the first sidelink feedback channels; and determine *N*_{Tx,PSFCH} first sidelink feedback channels from the N1 first sidelink feedback channels using the first spatial domain transmission filter, wherein *N*_{Tx,PSFCH} is less than or equal to N1; and
the transmitting module 1540 is further configured to transmit the *N*_{Tx,PSFCH} first sidelink feedback channels using the first spatial domain transmission filter.

In some embodiments, the determining module 1520 is further configured to: determine ${N}_{sch , Tx , PSFCH}^{′}$ first sidelink feedback channels corresponding to the first spatial domain transmission filter from the N1 first sidelink feedback channels; and determine the *N*_{Tx,PSFCH} first sidelink feedback channels from the ${N}_{sch , Tx , PSFCH}^{′}$ first sidelink feedback channels, wherein ${N}_{sch , Tx , PSFCH}^{′}$ is less than or equal to N1 and is greater than or equal to *N*_{Tx,PSFCH}.

In some embodiments, the determining module 1520 is further configured to: determine the *N*_{Tx,PSFCH} first sidelink feedback channels from the ${N}_{sch , Tx , PSFCH}^{′}$ first sidelink feedback channels based on first information.

In some embodiments, the first information includes at least one of:
the priorities of the N1 first sidelink feedback channels;
a maximum number *N*_{max,*PSFCH*} of simultaneously transmitted first sidelink feedback channels, wherein *N*_{max,*PSFCH*} is a positive integer;
a maximum transmit power *P*_{CMAX}; or
indication information indicating whether to perform power control based on a downlink path loss.

In some embodiments, the determining module 1520 is further configured to: select the *N*_{Tx,PSFCH} first sidelink feedback channels from the ${N}_{sch , Tx , PSFCH}^{′}$ first sidelink feedback channels based on the priorities in an order from highest to lowest in response to the power control based on the downlink path loss being not configured, wherein

*N*_{Tx,PSFCH} meets a condition: ${N}_{Tx , PSFCH} = min \left({N}_{sch , Tx , PSFCH}^{′}, {N}_{max , PSFCH}\right)$.

In some embodiments, each of the *N*_{Tx,PSFCH} first sidelink feedback channels has a same transmit power, and meets: ${P}_{PSFCH} = {P}_{CMAX} - 10 {log}_{10} \left({N}_{Tx , PSFCH}\right) .$

In some embodiments, the determining module 1520 is further configured to: determine a single channel maximum transmit power of the first sidelink feedback channels based on the downlink path loss in response to the power control based on the downlink path loss being configured, and
select the *N*_{Tx,PSFCH} first sidelink feedback channels from the ${N}_{sch , Tx , PSFCH}^{′}$ first sidelink feedback channels based on the single channel maximum transmit power and the *P*_{CMAX}.

In some embodiments, the determining module 1520 is further configured to: calculate the single channel maximum transmit power based on the following formula: *P_{PSFCH,one}* = *P*_{O_PSFCH} + 10log₁₀(2*^{µ}*) *+ α_{PSFCH}* · *PL_{D}*, wherein

*P*_{O_PSFCH} represents a parameter configured by a high layer signaling for performing the power control based on the downlink path loss, *α_{PSFCH}* represents a downlink path loss compensation factor configured by the high layer signaling for performing the power control for the first sidelink feedback channels, *PL_{D}* represents the downlink path loss estimated by a terminal, and µ is determined based on a sub-carrier spacing parameter.

In some embodiments, the determining module 1520 is further configured to: select the *N*_{Tx,PSFCH} first sidelink feedback channels from the ${N}_{sch , Tx , PSFCH}^{′}$ first sidelink feedback channels based on selection conditions, wherein
the selection conditions include: a total transmit power of the *N*_{Tx,PSFCH} first sidelink feedback channels being not greater than the *P*_{CMAX}, and *N*_{Tx,PSFCH} being less than or equal to $min \left({N}_{sch , Tx , PSFCH}^{′}, {N}_{max , PSFCH}\right)$.

In some embodiments, the determining module 1520 is further configured to: select the ${N}_{sch , Tx , PSFCH}^{′}$ first sidelink feedback channels in response to ${N}_{sch , Tx , PSFCH}^{′}$ being less than or equal to *N*_{max,PSFCH} and a total transmit power of the ${N}_{sch , Tx , PSFCH}^{′}$ first sidelink feedback channels being not greater than the *P*_{CMAX}.

In some embodiments, the determining module 1520 is further configured to: select *N*_{max,PSFCH} first sidelink feedback channels in response to ${N}_{sch , Tx , PSFCH}^{′}$ being greater than *N*_{max,PSFCH} and a total transmit power of the *N*_{max,PSFCH} first sidelink feedback channels being not greater than the *P*_{CMAX}.

In some embodiments, the determining module 1520 is further configured to: determine the transmit power of each of the ${N}_{sch , Tx , PSFCH}^{′}$ or *N*_{max,PSFCH} first sidelink feedback channels as the single channel maximum transmit power.

In some embodiments, the determining module 1520 is further configured to: select the *N*_{Tx,PSFCH} first sidelink feedback channels from the ${N}_{sch , Tx , PSFCH}^{′}$ first sidelink feedback channels based on the priorities in an order from highest to lowest in response to ${N}_{sch , Tx , PSFCH}^{′}$ being less than or equal to *N*_{max,PSFCH} and a total transmit power of the ${N}_{sch , Tx , PSFCH}^{′}$ first sidelink feedback channels being greater than the *P*_{CMAX}.${N}_{Tx , PSFCH} \geq max \left(1, {\sum }_{i = 1}^{K} {M}_{i}\right)$. *Mᵢ* represents the number of first sidelink feedback channels with a priority i in the ${N}_{sch , Tx , PSFCH}^{′}$ first sidelink feedback channels, or *Mᵢ* represents the number of first PSFCHs with a priority i in the *N*_{max,PSFCH} first PSFCHs. In some embodiments, K represents a maximum value meeting ${P}_{PSFCH , one} + 10 {log}_{10} \left(max\left(1, {\sum }_{i = 1}^{K} {M}_{i}\right)\right) \leq {P}_{CMAX}$ . illustratively, K is determined in the following way:
in the case that at least one K meets: ${P}_{PSFCH , one} + 10 {log}_{10} \left(max\left(1, {\sum }_{i = 1}^{K} {M}_{i}\right)\right) \leq {P}_{CMAX}$, K correspondingly meets a maximum of ${P}_{PSFCH , one} + 10 {log}_{10} \left(max\left(1, {\sum }_{i = 1}^{K} {M}_{i}\right)\right) \leq {P}_{CMAX}$, and otherwise K is equal to 0; or
in the case that K is equal to 0, ${\sum }_{i = 1}^{K} {M}_{i} = 0$, and *N*_{Tx,PSFCH} ≥ 1. That is, the terminal selects at least one first PSFCH. That is, the terminal selects at least one first PSFCH from A first PSFCHs with the highest priority. That is, *A* ≥ *N*_{Tx,PSFCH} ≥ 1.

In some embodiments, the determining module 1520 is further configured to: select *N*_{max,PSFCH} first sidelink feedback channels from the ${N}_{sch , Tx , PSFCH}^{′}$ first sidelink feedback channels based on the priorities in an order from highest to lowest in response to ${N}_{sch , Tx , PSFCH}^{′}$ being greater than *N*_{max,PSFCH}; and
select the *N*_{Tx,PSFCH} first sidelink feedback channels from the *N*_{max,PSFCH} first sidelink feedback channels based on the priorities in the order from highest to lowest in response to a total transmit power of the *N*_{max,PSFCH} first sidelink feedback channels being greater than the *P*_{CMAX}.${N}_{Tx , PSFCH} \geq max \left(1, {\sum }_{i = 1}^{K} {M}_{i}\right)$. *Mᵢ* represents the number of first sidelink feedback channels with a priority i in the *N*_{max,PSFCH} first sidelink feedback channels, or *Mᵢ* represents the number of first PSFCHs with a priority i in the *N*_{max,PSFCH} first PSFCHs. In some embodiments, K represents a maximum value meeting ${P}_{PSFCH , one} + 10 {log}_{10} \left(max\left(1, {\sum }_{i = 1}^{K} {M}_{i}\right)\right) \leq {P}_{CMAX}$ . illustratively, K is determined in the following way:
in the case that at least one K meets: ${P}_{PSFCH , one} + 10 {log}_{10} \left(max\left(1, {\sum }_{i = 1}^{K} {M}_{i}\right)\right) \leq {P}_{CMAX}$, K correspondingly meets a maximum of ${P}_{PSFCH , one} + 10 {log}_{10} \left(max\left(1, {\sum }_{i = 1}^{K} {M}_{i}\right)\right) \leq {P}_{CMAX}$, and otherwise K is equal to 0; or
in the case that K is equal to 0, ${\sum }_{i = 1}^{K} {M}_{i} = 0$, and *N*_{Tx,PSFCH} ≥ 1. That is, the terminal selects at least one first PSFCH. That is, the terminal selects at least one first PSFCH from A first PSFCHs with the highest priority. That is, *A* ≥ *N*_{Tx,PSFCH} ≥ 1.

In some embodiments, the determining module 1520 is further configured to determine the transmit power of each of the *N*_{Tx,PSFCH} first sidelink feedback channels based on: ${P}_{PSFCH} = min \left({P}_{CMAX}-10{log}_{10}\left({N}_{Tx , PSFCH}\right),{P}_{PSFCH , one}\right) ;$
wherein *P*_{PSFCH,one} represents the single channel maximum transmit power.

In some embodiments, the determining module 1520 is further configured to: determine the first spatial domain reception filter corresponding to the second sidelink feedback channel with a highest priority in response to determining to receive the second sidelink feedback channels; and determine *N*_{Rx,PSFCH} second sidelink feedback channels using the first spatial domain reception filter; and
the receiving module 1560 is further configured to receive the *N*_{Rx,PSFCH} second sidelink feedback channels using the first spatial domain reception filter.

In some embodiments, the determining module 1520 is further configured to: determine ${N}_{sch , Rx , PSFCH}^{′}$ second sidelink feedback channels corresponding to the first spatial domain reception filter from the N2 second sidelink feedback channels; and determine the *N*_{Rx,PSFCH} second sidelink feedback channels from the ${N}_{sch , Rx , PSFCH}^{′}$ second sidelink feedback channels.

In some embodiments, the determining module 1520 is further configured to: determine the *N*_{Rx,PSFCH} second sidelink feedback channels from the ${N}_{sch , Rx , PSFCH}^{′}$ second sidelink feedback channels based on second information.

In some embodiments, the second information includes at least one of:
the priorities of the N2 second sidelink feedback channels; or
a maximum number N_(max,Rx,PSFCH) of simultaneously received second sidelink feedback channels, wherein N_(max,Rx,PSFCH) is a positive integer.

In some embodiments, the determining module 1520 is further configured to: determine all of the ${N}_{sch , Rx , PSFCH}^{′}$ second sidelink feedback channels as the *N*_{Rx,PSFCH} second sidelink feedback channels in response to ${N}_{sch , Rx , PSFCH}^{′}$ being less than *N*_{Rx,PSFCH}; or select *N*_{max,RX,PSFCH} second sidelink feedback channels from the ${N}_{sch , Rx , PSFCH}^{′}$ second sidelink feedback channels based on the priorities in an order from highest to lowest in response to ${N}_{sch , Rx , PSFCH}^{′}$ being greater than *N*_{max,Rx,PSFCH}, and determine the *N*_{max,RX,PSFCH} second sidelink feedback channels as the *N*_{Rx,PSFCH} second sidelink feedback channels.

It should be noted that embodiments of the virtual apparatus shown in FIG. 15 correspond to the above embodiments of the methods. The determining module 1520 is configured to perform the determination process or selection process in the above embodiments of the methods, the transmitting module 1540 is configured to perform the transmission processes in the above embodiments of the methods, and the receiving module 1560 is configured to perform the reception processes in the above embodiments of the methods.

FIG. 16 is a block diagram of a communication device (a first terminal, a second terminal, or a network device) according to some embodiments of the present disclosure. The communication device includes: a processor 101, a receiver 102, a transmitter 103, a memory 104, and a bus 105.

The processor 101 includes one or more processing cores, and achieves various functional applications and information processing by running software programs and modules.

The receiver 102 and the transmitter 103 are practiced as a communication assembly, and the communication assembly is a communication chip.

The memory 104 is connected to the processor 101 by the bus 105.

The memory 104 is configured to store one or more instructions, and the processor 101, when loading and running the one or more c instructions, is caused to perform the method for transmitting the sidelink feedback channels performed by the terminal in the above method embodiments.

In addition, the memory 104 is achieved by any type of volatile or non-volatile storage device or combinations thereof. The volatile or non-volatile storage device includes, but is not limited to: a disk or optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

Some embodiments of the present disclosure further provide a computer-readable storage medium storing at least one instruction, at least one program, a code set, or an instruction set therein, wherein the at least one instruction, the at least one program, the code set, or the instruction set, when loaded and executed by a processor, cause the processor to perform the method for transmitting the sidelink feedback channels performed by the terminal in the above method embodiments.

Some embodiments of the present disclosure further provide a computer program product or a computer program including one or more computer instructions therein. The one or more computer instructions are stored in a computer-readable storage medium, and when loaded and executed by a processor of a communication device, cause the communication device to perform the method for transmitting the sidelink feedback channels performed by the terminal in the above method embodiments.

It should be understood by persons of ordinary skill in the art that all or part of the processes in the above-mentioned embodiments may be implemented by hardware, or by a corresponding hardware instructed by a program. The program may be stored in a computer-readable storage medium, and the storage medium mentioned above may be a read-only memory, a magnetic disk, an optical disk, or the like.

Described above are merely exemplary embodiments of the present disclosure, and are not intended to limit the present disclosure. Any modifications, equivalent replacements, improvements and the like made within the principles of the present disclosure should be encompassed within the scope of protection of the present disclosure.

## Claims

1. A method for transmitting sidelink feedback channels, comprising:
in a case that N1 first sidelink feedback channels and N2 second sidelink feedback channels overlap in a time domain, determining (S720), based on priorities of the N1 first sidelink feedback channels and priorities of the N2 second sidelink feedback channels, to transmit the first sidelink feedback channels or receive the second sidelink feedback channels, wherein N1 and N2 are both positive integers;
transmitting (S740) at least one of the N1 first sidelink feedback channels using a first spatial domain transmission filter in response to determining to transmit the first sidelink feedback channels, wherein the first spatial domain transmission filter corresponds to a first transmission beam; and
receiving (S760) at least one of the N2 second sidelink feedback channels using a first spatial domain reception filter in response to determining to receive the second sidelink feedback channels, wherein the first spatial domain reception filter corresponds to a first reception beam;
wherein the first spatial domain transmission filter corresponds to a spatial domain transmission filter of one of the N1 first sidelink feedback channels, and the first spatial domain reception filter corresponds to a spatial domain reception filter of one of the N2 second sidelink feedback channels;
wherein receiving (S760) at least one of the N2 second sidelink feedback channels using the first spatial domain reception filter comprises:
determining the first spatial domain reception filter corresponding to the second sidelink feedback channel with a highest priority in response to determining to receive the second sidelink feedback channels;
determining ${N}_{sch , Rx , PSFCH}^{′}$ second sidelink feedback channels corresponding to the first spatial domain reception filter from the N2 second sidelink feedback channels;
determining *N*_{Rx,PSFCH} second sidelink feedback channels from the ${N}_{sch , Rx , PSFCH}^{′}$ second sidelink feedback channels based on second information, wherein the second information comprises at least one of: priorities of the N2 second sidelink feedback channels; or a maximum number *N*_{max,Rx,PSFCH} of simultaneously received second sidelink feedback channels, wherein *N*_{max,Rx,PSFCH} is a positive integer; and
receiving the *N*_{Rx,PSFCH} second sidelink feedback channels using the first spatial domain reception filter;
wherein determining the *N*_{Rx,PSFCH} second sidelink feedback channels from the ${N}_{sch , Rx , PSFCH}^{′}$ second sidelink feedback channels based on the second information comprises:
determining all of the ${N}_{sch , Rx , PSFCH}^{′}$ second sidelink feedback channels as the *N*_{Rx,PSFCH} second sidelink feedback channels in response to ${N}_{sch , Rx , PSFCH}^{′}$ being less than *N*_{Rx,PSFCH}; or
selecting *N*_{max,RX,PSFCH} second sidelink feedback channels from the ${N}_{sch , Rx , PSFCH}^{′}$ second sidelink feedback channels based on the priorities in an order from highest to lowest in response to ${N}_{sch , Rx , PSFCH}^{′}$ being greater than *N*_{max,Rx,PSFCH}, and determining the *N*_{max,RX,PSFCH} second sidelink feedback channels as the *N*_{Rx,PSFCH} second sidelink feedback channels.

2. The method according to claim 1, wherein determining (S720), based on the priorities of the N1 first sidelink feedback channels and the priorities of the N2 second sidelink feedback channels, to transmit the first sidelink feedback channels or receive the second sidelink feedback channels comprises:
determining a priority value P1 corresponding to a highest priority of the N1 first sidelink feedback channels and a priority value P2 corresponding to a highest priority of the N2 second sidelink feedback channels, wherein P1 and P2 are both integers;
determining to transmit the first sidelink feedback channels in response to the priority value P1 being less than the priority value P2; and
determining to receive the second sidelink feedback channels in response to the priority value P1 being greater than the priority value P2.

3. The method according to claim 1, wherein transmitting (S740) at least one of the N1 first sidelink feedback channels using the first spatial domain transmission filter in response to determining to transmit the first sidelink feedback channels comprises:
determining (S742) the first spatial domain transmission filter corresponding to the first sidelink feedback channel with a highest priority in response to determining to transmit the first sidelink feedback channels;
determining (S744) *N*_{Tx,PSFCH} first sidelink feedback channels from the N1 first sidelink feedback channels using the first spatial domain transmission filter, wherein *N*_{Tx,PSFCH} is less than or equal to N1; and
transmitting (S746) the *N*_{Tx,PSFCH} first sidelink feedback channels using the first spatial domain transmission filter.

4. The method according to claim 3, wherein determining (S744) the *N*_{Tx,PSFCH} first sidelink feedback channels from the N1 first sidelink feedback channels using the first spatial domain transmission filter comprises:
determining ${N}_{sch , Tx , PSFCH}^{′}$ first sidelink feedback channels corresponding to the first spatial domain transmission filter from the N1 first sidelink feedback channels; and
determining the *N*_{Tx,PSFCH} first sidelink feedback channels from the ${N}_{sch , Tx , PSFCH}^{′}$ first sidelink feedback channels, wherein ${N}_{sch , Tx , PSFCH}^{′}$ is less than or equal to N1 and is greater than or equal to *N*_{Tx,PSFCH}.

5. The method according to claim 4, wherein determining the *N*_{Tx,PSFCH} first sidelink feedback channels from the ${N}_{sch , Tx , PSFCH}^{′}$ first sidelink feedback channels comprises:
determining the *N*_{Tx,PSFCH} first sidelink feedback channels from the ${N}_{sch , Tx , PSFCH}^{′}$ first sidelink feedback channels based on first information; wherein the first information comprises at least one of:
the priorities of the N1 first sidelink feedback channels;
a maximum number *N*_{max*,PSFCH*} of simultaneously transmitted first sidelink feedback channels, wherein *N*_{max*,PSFCH*} is a positive integer;
a maximum transmit power *P*_{CMAX}; or
indication information indicating whether to perform power control based on a downlink path loss.

6. The method according to claim 5, wherein determining the *N*_{Tx,PSFCH} first sidelink feedback channels from the ${N}_{sch , Tx , PSFCH}^{′}$ first sidelink feedback channels based on the first information comprises:
selecting the *N*_{Tx,PSFCH} first sidelink feedback channels from the ${N}_{sch , Tx , PSFCH}^{′}$ first sidelink feedback channels based on the priorities in an order from highest to lowest in response to the power control based on the downlink path loss being not configured, wherein *N*_{Tx,PSFCH} meets a condition: ${N}_{Tx , PSFCH} = min \left({N}_{sch , Tx , PSFCH}^{′}, {N}_{max , PSFCH}\right)$, and each of the *N*_{Tx,PSFCH} first sidelink feedback channels has a same transmit power, and meets: *P*_{PSFCH} = *P*_{CMAX} - 10log₁₀(*N*_{Tx*,PSFCH*}).

7. The method according to claim 5, wherein determining the *N*_{Tx,PSFCH} first sidelink feedback channels from the ${N}_{sch , Tx , PSFCH}^{′}$ first sidelink feedback channels based on the first information comprises:
determining (S744a) a single channel maximum transmit power of the first sidelink feedback channels based on the downlink path loss in response to the power control based on the downlink path loss being configured; and
selecting (S744b) the *N*_{Tx,PSFCH} first sidelink feedback channels from the ${N}_{sch , Tx , PSFCH}^{′}$ first sidelink feedback channels based on the single channel maximum transmit power and the *P*_{CMAX};
wherein determining the single channel maximum transmit power of the first sidelink feedback channels based on the downlink path loss in response to the power control based on the downlink path loss being configured comprises:
calculating the single channel maximum transmit power based on the following formula: *P_{PSFCH,one}* = *P*_{O_PSFCH} + 10log₁₀(2*^{µ}*) *+ α_{PSFCH}* · *PL_{D}*, wherein *P*_{O_PSFCH} represents a parameter configured by a high layer signaling for performing the power control based on the downlink path loss, *α_{PSFCH}* represents a downlink path loss compensation factor configured by the high layer signaling for performing the power control for the first sidelink feedback channels, *PL_{D}* represents the downlink path loss estimated by a terminal, and µ is determined based on a sub-carrier spacing parameter.

8. The method according to claim 7, wherein selecting (S744b) the *N*_{Tx,PSFCH} first sidelink feedback channels from the ${N}_{sch , Tx , PSFCH}^{′}$ first sidelink feedback channels comprises:
selecting the *N*_{Tx,PSFCH} first sidelink feedback channels from the ${N}_{sch , Tx , PSFCH}^{′}$ first sidelink feedback channels based on selection conditions, wherein the selection conditions comprise: a total transmit power of the *N*_{Tx,PSFCH} first sidelink feedback channels being not greater than the *P*_{CMAX}, and *N*_{Tx,PSFCH} being less than or equal to $min \left({N}_{sch , Tx , PSFCH}^{′}, {N}_{max , PSFCH}\right)$ .

9. The method according to claim 8, wherein selecting the *N*_{Tx,PSFCH} first sidelink feedback channels from the ${N}_{sch , Tx , PSFCH}^{′}$ first sidelink feedback channels based on the selection conditions comprises:
selecting the ${N}_{sch , Tx , PSFCH}^{′}$ first sidelink feedback channels in response to ${N}_{sch , Tx , PSFCH}^{′}$ being less than or equal to *N*_{max,PSFCH} and a total transmit power of the ${N}_{sch , Tx , PSFCH}^{′}$ first sidelink feedback channels being not greater than the *P*_{CMAX}; or
selecting *N*_{max,PSFCH} first sidelink feedback channels in response to ${N}_{sch , Tx , PSFCH}^{′}$ being greater than *N*_{max,PSFCH} and a total transmit power of the *N*_{max,PSFCH} first sidelink feedback channels being not greater than the *P*_{CMAX}.

10. An apparatus for transmitting sidelink feedback channels, comprising:
a determining module (1520), configured to: in a case that N1 first sidelink feedback channels and N2 second sidelink feedback channels overlap in a time domain, determine, based on priorities of the N1 first sidelink feedback channels and priorities of the N2 second sidelink feedback channels, to transmit the first sidelink feedback channels or receive the second sidelink feedback channels, wherein N1 and N2 are both positive integers;
a transmitting module (1540), configured to transmit at least one of the N1 first sidelink feedback channels using a first spatial domain transmission filter in response to determining to transmit the first sidelink feedback channels, wherein the first spatial domain transmission filter corresponds to a first transmission beam; and
a receiving module (1560), configured to receive at least one of the N2 second sidelink feedback channels using a first spatial domain reception filter in response to determining to receive the second sidelink feedback channels, wherein the first spatial domain reception filter corresponds to a first reception beam;
wherein the N1 first sidelink feedback channels are sidelink feedback channels for transmission, the N2 second sidelink feedback channels are sidelink feedback channels for reception, the first spatial domain transmission filter corresponds to a spatial domain transmission filter of one of the N1 first sidelink feedback channels, and the first spatial domain reception filter corresponds to a spatial domain reception filter of one of the N2 second sidelink feedback channels;
wherein
the determining module (1520) is further configured to: determine the first spatial domain reception filter corresponding to the second sidelink feedback channel with a highest priority in response to determining to receive the second sidelink feedback channels; determine ${N}_{sch , Rx , PSFCH}^{′}$ second sidelink feedback channels corresponding to the first spatial domain reception filter from the N2 second sidelink feedback channels; and determine *N*_{Rx,PSFCH} second sidelink feedback channels from the ${N}_{sch , Rx , PSFCH}^{′}$ second sidelink feedback channels based on second information, wherein the second information comprises at least one of: the priorities of the N2 second sidelink feedback channels; or a maximum number *N*_{max,Rx,PSFCH} of simultaneously received second sidelink feedback channels, wherein *N*_{max,Rx,PSFCH} is a positive integer; and
the receiving module (1560) is further configured to: receive the *N*_{Rx,PSFCH} second sidelink feedback channels using the first spatial domain reception filter;
wherein the determining module (1520) is further configured to:
determine all of the ${N}_{sch , Rx , PSFCH}^{′}$ second sidelink feedback channels as the *N*_{Rx,PSFCH} second sidelink feedback channels in response to ${N}_{sch , Rx , PSFCH}^{′}$ being less than *N*_{Rx,PSFCH}; or
select *N*_{max,RX,PSFCH} second sidelink feedback channels from the ${N}_{sch , Rx , PSFCH}^{′}$ second sidelink feedback channels based on the priorities in an order from highest to lowest in response to ${N}_{sch , Rx , PSFCH}^{′}$ being greater than *N*_{max,Rx,PSFCH}, and determine the *N*_{max,RX,PSFCH} second sidelink feedback channels as the *N*_{Rx,PSFCH} second sidelink feedback channels.

11. A chip, configured to perform the method for transmitting the sidelink feedback channels as defined in any one of claims 1 to 9.

## Patentansprüche

1. Verfahren zum Übertragen von Sidelink-Rückkopplungskanälen, Folgendes umfassend:
in einem Fall, in dem sich N1 erste Sidelink-Rückkopplungskanäle und N2 zweite Sidelink-Rückkopplungskanäle in einer Zeitdomäne überlappen, Bestimmen (S720), auf Grundlage von Prioritäten der N1 ersten Sidelink-Rückkopplungskanäle und Prioritäten der N2 zweiten Sidelink-Rückkopplungskanäle, die ersten Sidelink-Rückkopplungskanäle zu übertragen oder die zweiten Sidelink-Rückkopplungskanäle zu empfangen, wobei sowohl N1 als auch N2 positive ganze Zahlen sind;
Übertragen (S740) mindestens eines der N1 ersten Sidelink-Rückkopplungskanäle unter Verwendung eines ersten Raumdomänenübertragungsfilters als Reaktion auf das Bestimmen, die ersten Sidelink-Rückkopplungskanäle zu übertragen, wobei das erste Raumdomänenübertragungsfilter einem ersten Übertragungsstrahl entspricht; und
Empfangen (S760) mindestens eines der N2 zweiten Sidelink-Rückkopplungskanäle unter Verwendung eines ersten Raumdomänenempfangsfilters als Reaktion auf das Bestimmen, die zweiten Sidelink-Rückkopplungskanäle zu empfangen, wobei das erste Raumdomänenempfangsfilter einem ersten Empfangsstrahl entspricht;
wobei das erste Raumdomänenübertragungsfilter einem Raumdomänenübertragungsfilter eines der N1 ersten Sidelink-Rückkopplungskanäle entspricht und das erste Raumdomänenempfangsfilter einem Raumdomänenempfangsfilter eines der N2 zweiten Sidelink-Rückkopplungskanäle entspricht;
wobei Empfangen (S760) mindestens eines der N2 zweiten Sidelink-Rückkopplungskanäle unter Verwendung des ersten Raumdomänenempfangsfilters Folgendes umfasst:
Bestimmen des ersten Raumdomänenempfangsfilters, der dem zweiten Sidelink-Rückkopplungskanal mit einer höchsten Priorität entspricht, als Reaktion auf das Bestimmen, die zweiten Sidelink-Rückkopplungskanäle zu empfangen;
Bestimmen von ${N}_{sch , Rx , PSFCH}^{′}$ zweiten Sidelink-Rückkopplungskanälen, die dem ersten Raumdomänenempfangsfilter entsprechen, aus den N2 zweiten Sidelink-Rückkopplungskanälen;
Bestimmen von N_{Rx,PSFCH} zweiten Sidelink-Rückkopplungskanälen aus den ${N}_{sch , Rx , PSFCH}^{′}$ zweiten Sidelink-Rückkopplungskanälen auf Grundlage zweiter Informationen, wobei die zweiten Informationen mindestens eines von Folgendem umfassen: Prioritäten der N2 zweiten Sidelink -Rückkopplungskanäle; oder eine maximale Anzahl N_{max,Rx,PSFCH} von gleichzeitig empfangenen zweiten Sidelink-Rückkopplungskanälen, wobei N_{max,Rx,PSFCH} eine positive ganze Zahl ist; und
Empfangen der N_{Rx,PSFCH} zweiten Sidelink-Rückkopplungskanäle unter Verwendung des ersten Raumdomänenempfangsfilters;
wobei Bestimmen der N_{Rx,PSFCH} zweiten Sidelink-Rückkopplungskanäle aus den ${N}_{sch , Rx , PSFCH}^{′}$ zweiten Sidelink-Rückkopplungskanälen auf Grundlage der zweiten Informationen Folgendes umfasst:
Bestimmen aller ${N}_{sch , Rx , PSFCH}^{′}$ zweiten Sidelink-Rückkopplungskanäle als die N_{Rx,PSFCH} zweiten Sidelink-Rückkopplungskanäle als Reaktion darauf, dass ${N}_{sch , Rx , PSFCH}^{′}$ kleiner ist als N_{Rx,PSFCH}; oder
Auswählen von N_{max,RX,PSFCH} zweiten Sidelink-Rückkopplungskanälen aus den ${N}_{sch , Rx , PSFCH}^{′}$ zweiten Sidelink-Rückkopplungskanälen auf Grundlage der Prioritäten in einer Reihenfolge von der höchsten zur niedrigsten als Reaktion darauf, dass ${N}_{sch , Rx , PSFCH}^{′}$ größer ist als N_{max,Rx,PSFCH}, und Bestimmen der N_{max,RX,PSFCH} zweiten Sidelink-Rückkopplungskanäle als die N_{Rx,PSFCH} zweiten Sidelink-Rückkopplungskanäle.

2. Verfahren nach Anspruch 1, wobei Bestimmen (S720), auf Grundlage der Prioritäten der N1 ersten Sidelink-Rückkopplungskanäle und der Prioritäten der N2 zweiten Sidelink-Rückkopplungskanäle, die ersten Sidelink-Rückkopplungskanäle zu übertragen oder die zweiten Sidelink-Rückkopplungskanäle zu empfangen, Folgendes umfasst:
Bestimmen eines Prioritätswerts P1, der einer höchsten Priorität der N1 ersten Sidelink-Rückkopplungskanäle entspricht, und eines Prioritätswerts P2, der einer höchsten Priorität der N2 zweiten Sidelink-Rückkopplungskanäle entspricht, wobei sowohl P1 als auch P2 ganze Zahlen sind;
Bestimmen, die ersten Sidelink-Rückkopplungskanäle zu übertragen, als Reaktion darauf, dass der Prioritätswert P1 kleiner ist als der Prioritätswert P2; und
Bestimmen, die zweiten Sidelink-Rückkopplungskanäle zu empfangen, als Reaktion darauf, dass der Prioritätswert P1 größer ist als der Prioritätswert P2.

3. Verfahren nach Anspruch 1, wobei Übertragen (S740) mindestens eines der N1 ersten Sidelink-Rückkopplungskanäle unter Verwendung des ersten Raumdomänenübertragungsfilters als Reaktion auf das Bestimmen, die ersten Sidelink-Rückkopplungskanäle zu übertragen, Folgendes umfasst:
Bestimmen (S742) des ersten Raumdomänenübertragungsfilters, das dem ersten Sidelink-Rückkopplungskanal mit einer höchsten Priorität entspricht, als Reaktion auf das Bestimmen, die ersten Sidelink-Rückkopplungskanäle zu übertragen;
Bestimmen (S744) von N_{Tx,PSFCH} ersten Sidelink-Rückkopplungskanälen aus den N1 ersten Sidelink-Rückkopplungskanälen unter Verwendung des ersten Raumdomänenübertragungsfilters, wobei N_{Tx,PSFCH} kleiner oder gleich N1 ist; und
Übertragen (S746) der N_{Tx,PSFCH} ersten Sidelink-Rückkopplungskanäle unter Verwendung des ersten Raumdomänenübertragungsfilters.

4. Verfahren nach Anspruch 3, wobei Bestimmen (S744) der N_{Tx,PSFCH} ersten Sidelink-Rückkopplungskanäle aus den N1 ersten Sidelink-Rückkopplungskanälen unter Verwendung des ersten Raumdomänenübertragungsfilters Folgendes umfasst:
Bestimmen von ${N}_{sch , Tx , PSFCH}^{′}$ ersten Sidelink-Rückkopplungskanälen, die dem ersten Raumdomänenübertragungsfilter entsprechen, aus den N1 ersten Sidelink-Rückkopplungskanälen; und
Bestimmen der N_{Tx,PSFCH} ersten Sidelink-Rückkopplungskanäle aus den ${N}_{sch , Tx , PSFCH}^{′}$ ersten Sidelink-Rückkopplungskanälen, wobei ${N}_{sch , Tx , PSFCH}^{′}$ kleiner oder gleich N1 ist und größer oder gleich N_{Tx,PSFCH} ist.

5. Verfahren nach Anspruch 4, wobei Bestimmen der N_{Tx,PSFCH} ersten Sidelink-Rückkopplungskanäle aus den ${N}_{sch , Tx , PSFCH}^{′}$ ersten Sidelink-Rückkopplungskanälen Folgendes umfasst:
Bestimmen der N_{Tx,PSFCH} ersten Sidelink-Rückkopplungskanäle aus den ${N}_{sch , Tx , PSFCH}^{′}$ ersten Sidelink-Rückkopplungskanälen auf Grundlage erster Informationen; wobei die ersten Informationen mindestens eines von Folgendem umfassen:
die Prioritäten der N1 ersten Sidelink-Rückkopplungskanäle;
eine maximale Anzahl N_{max,PSFCH} gleichzeitig übertragener erster Sidelink-Rückkopplungskanäle, wobei N_{max,psfch} eine positive ganze Zahl ist;
eine maximale Sendeleistung P_{CMAX}; oder
Indikationsinformationen, die angeben, ob eine Leistungssteuerung auf Grundlage eines Downlink-Pfadverlusts durchzuführen ist.

6. Verfahren nach Anspruch 5, wobei Bestimmen der N_{Tx,PSFCH} ersten Sidelink-Rückkopplungskanäle aus den ersten ${N}_{sch , Tx , PSFCH}^{′}$ Sidelink-Rückkopplungskanälen auf Grundlage der ersten Informationen Folgendes umfasst:
Auswählen der N_{Tx,PSFCH} ersten Sidelink-Rückkopplungskanäle aus den ${N}_{sch , Tx , PSFCH}^{′}$ ersten Sidelink-Rückkopplungskanälen auf Grundlage der Prioritäten in einer Reihenfolge von der höchsten zur niedrigsten als Reaktion darauf, dass die Leistungssteuerung nicht auf Grundlage des Downlink-Pfadverlusts konfiguriert ist, erfüllt, wobei N_{Tx,PSFCH} eine Bedingung erfüllt: ${N}_{Tx , PSFCH} = min \left({N}_{sch , Tx , PSFCH}^{′}, {N}_{max , PSFCH}\right)$ , und jeder der N_{Tx,PSFCH} ersten Sidelink-Rückkopplungskanäle eine gleiche Sendeleistung aufweist und Folgendes erfüllt: P_{PSFCH} = P_{CMAX} - 10log₁₀(N_{Tx,PSFCH}).

7. Verfahren nach Anspruch 5, wobei Bestimmen der N_{Tx,PSFCH} ersten Sidelink-Rückkopplungskanäle aus den ersten ${N}_{sch , Tx , PSFCH}^{′}$ Sidelink-Rückkopplungskanälen auf Grundlage der ersten Informationen Folgendes umfasst:
Bestimmen (S744a) einer maximalen Einzelkanalsendeleistung der ersten Sidelink-Rückkopplungskanäle auf Grundlage des Downlink-Pfadverlusts als Reaktion darauf, dass die Leistungssteuerung auf Grundlage des Downlink-Pfadverlusts konfiguriert ist; und
Auswählen (S744b) der N_{Tx,PSFCH} ersten Sidelink-Rückkopplungskanäle aus den ${N}_{sch , Tx , PSFCH}^{′}$ ersten Sidelink-Rückkopplungskanälen auf Grundlage der maximalen Einzelkanalsendeleistung und der P_{CMAX};
wobei Bestimmen der maximalen Einzelkanalsendeleistung der ersten Sidelink-Rückkopplungskanäle auf Grundlage des Downlink-Pfadverlusts als Reaktion darauf, dass die Leistungssteuerung auf Grundlage des Downlink-Pfadverlusts konfiguriert ist, Folgendes umfasst:
Berechnen der maximalen Einzelkanalsendeleistung auf Grundlage der folgenden Formel: P_{PSFCH,One} = P_{O_PSFCH} + 10log₁₀(2^{µ}) + α_{PSFCH}·PL_{D}, wobei P_{O_PSFCH} einen Parameter repräsentiert, der durch eine High-Layer-Signalisierung zum Durchführen der Leistungssteuerung auf Grundlage des Downlink-Pfadverlusts konfiguriert ist, α_{PSFCH} einen Downlink-Pfadverlust-Kompensationsfaktor repräsentiert, der durch die High-Layer-Signalisierung zum Durchführen der Leistungssteuerung für die ersten Sidelink-Rückkopplungskanäle konfiguriert ist, PL_{D} den Downlink-Pfadverlust repräsentiert, der von einem Endgerät geschätzt wurde, und µ auf Grundlage eines Subträger-Abstandsparameters bestimmt wird.

8. Verfahren nach Anspruch 7, wobei Auswählen (S744b) der N_{Tx,PSFCH} ersten Sidelink-Rückkopplungskanäle aus den ${N}_{sch , Tx , PSFCH}^{′}$ ersten Sidelink-Rückkopplungskanälen Folgendes umfasst:
Auswählen der N_{Tx,PSFCH} ersten Sidelink-Rückkopplungskanäle aus den ${N}_{sch , Tx , PSFCH}^{′}$ ersten Sidelink-Rückkopplungskanälen auf Grundlage von Auswahlbedingungen, wobei die Auswahlbedingungen Folgendes umfassen: eine Gesamtsendeleistung der N_{Tx,PSFCH} ersten Sidelink-Rückkopplungskanäle ist nicht größer als die P_{CMAX} und N_{Tx,psfch} ist kleiner oder gleich $min \left({N}_{sch , Tx , PSFCH}^{′}, {N}_{max , PSFCH}\right)$.

9. Verfahren nach Anspruch 8, wobei Auswählen der N_{Tx,PSFCH} ersten Sidelink-Rückkopplungskanäle aus den ${N}_{sch , Tx , PSFCH}^{′}$ ersten Sidelink-Rückkopplungskanälen auf Grundlage der Auswahlbedingungen Folgendes umfasst:
Auswählen der ${N}_{sch , Tx , PSFCH}^{′}$ ersten Sidelink-Rückkopplungskanäle als Reaktion darauf, dass ${N}_{sch , Tx , PSFCH}^{′}$ kleiner oder gleich N_{max,PSFCH} ist und eine Gesamtsendeleistung der ${N}_{sch , Tx , PSFCH}^{′}$ ersten Sidelink-Rückkopplungskanäle nicht größer ist als die P_{CMAX}; oder
Auswählen von N_{max,PSFCH} ersten Sidelink-Rückkopplungskanälen als Reaktion darauf, dass ${N}_{sch , Tx , PSFCH}^{′}$ größer ist als N_{max,PSFCH} und eine Gesamtsendeleistung der N_{max,PSFCH} ersten Sidelink-Rückkopplungskanäle nicht größer ist als die P_{CMAX}.

10. Vorrichtung zum Übertragen von Sidelink-Rückkopplungskanälen, Folgendes umfassend:
ein Bestimmungsmodul (1520), das ausgelegt ist, um: in einem Fall, in dem sich N1 erste Sidelink-Rückkopplungskanäle und N2 zweite Sidelink-Rückkopplungskanäle in einer Zeitdomäne überlappen, auf Grundlage von Prioritäten der N1 ersten Sidelink-Rückkopplungskanäle und Prioritäten der N2 zweiten Sidelink-Rückkopplungskanäle zu bestimmen, die ersten Sidelink-Rückkopplungskanäle zu übertragen oder die zweiten Sidelink-Rückkopplungskanäle zu empfangen, wobei sowohl N1 als auch N2 positive ganze Zahlen sind;
ein Übertragungsmodul (1540), das dazu ausgelegt ist, mindestens einen der N1 ersten Sidelink-Rückkopplungskanäle unter Verwendung eines ersten Raumdomänenübertragungsfilters als Reaktion auf das Bestimmen zu übertragen, die ersten Sidelink-Rückkopplungskanäle zu übertragen, wobei das erste Raumdomänenübertragungsfilter einem ersten Übertragungsstrahl entspricht; und
ein Empfangsmodul (1560), das dazu ausgelegt ist, mindestens einen der N2 zweiten Sidelink-Rückkopplungskanäle unter Verwendung eines ersten Raumdomänenempfangsfilters als Reaktion auf das Bestimmen zu empfangen, die zweiten Sidelink-Rückkopplungskanäle zu empfangen, wobei das erste Raumdomänenempfangsfilter einem ersten Empfangsstrahl entspricht;
wobei die N1 ersten Sidelink-Rückkopplungskanäle Sidelink-Rückkopplungskanäle zur Übertragung sind, die N2 zweiten Sidelink-Rückkopplungskanäle Sidelink-Rückkopplungskanäle zum Empfang sind, das erste Raumdomänenübertragungsfilter einem Raumdomänenübertragungsfilter eines der N1 ersten Sidelink-Rückkopplungskanäle entspricht und das erste Raumdomänenempfangsfilter einem Raumdomänenempfangsfilter eines der N2 zweiten Sidelink-Rückkopplungskanäle entspricht;
wobei
das Bestimmungsmodul (1520) ferner ausgelegt ist, um: das erste Raumdomänenempfangsfilter, das dem zweiten Sidelink-Rückkopplungskanal mit einer höchsten Priorität entspricht, als Reaktion auf Bestimmen, die zweiten Sidelink-Rückkopplungskanäle zu empfangen, zu bestimmen; ${N}_{sch , Rx , PSFCH}^{′}$ zweite Sidelink-Rückkopplungskanäle, die dem ersten Raumdomänenempfangsfilter entsprechen, aus den N2 zweiten Sidelink-Rückkopplungskanälen zu bestimmen; und
N_{Rx,PSFCH} zweite Sidelink-Rückkopplungskanäle aus den ${N}_{sch , Rx , PSFCH}^{′}$ zweiten Sidelink-Rückkopplungskanälen auf Grundlage zweiter Informationen zu bestimmen, wobei die zweiten Informationen mindestens eines von Folgendem umfassen: die Prioritäten der N2 zweiten Sidelink-Rückkopplungskanäle; oder eine maximale Anzahl N_{max,Rx,PSFCH} gleichzeitig empfangener zweiter Sidelink-Rückkopplungskanäle, wobei N_{max,Rx,PSFCH} eine positive ganze Zahl ist; und
das Empfangsmodul (1560) ferner ausgelegt ist, um: die N_{Rx,PSFCH} zweiten Sidelink-Rückkopplungskanäle unter Verwendung des ersten Raumdomänenempfangsfilters zu empfangen;
wobei das Bestimmungsmodul (1520) ferner zu Folgendem ausgelegt ist:
alle ${N}_{sch , Rx , PSFCH}^{′}$ zweiten Sidelink-Rückkopplungskanäle als die N_{Rx,PSFCH} zweiten Sidelink-Rückkopplungskanäle als Reaktion darauf zu bestimmen, dass N_{sch,Rx,PSFCH} kleiner ist als N_{Rx,PSFCH}; oder
N_{max,RX,PSFCH} zweiter Sidelink-Rückkopplungskanäle aus den ${N}_{sch , Rx , PSFCH}^{′}$ zweiten Sidelink-Rückkopplungskanälen auf Grundlage der Prioritäten in einer Reihenfolge von der höchsten zur niedrigsten als Reaktion darauf auszuwählen, dass ${N}_{sch , Rx , PSFCH}^{′}$ größer ist als N_{max,RxPSFCH}, und die N_{max,RX,PSFCH} zweiten Sidelink-Rückkopplungskanäle als die N_{Rx,PSFCH} zweiten Sidelink-Rückkopplungskanäle zu bestimmen.

11. Chip, der dazu ausgelegt ist, das Verfahren zum Übertragen der Sidelink-Rückkopplungskanäle gemäß einem der Ansprüche 1 bis 9 durchzuführen.

## Revendications

1. Procédé de transmission de canaux de rétroaction de liaison latérale, comprenant :
dans un cas où N1 premiers canaux de rétroaction de liaison latérale et N2 seconds canaux de rétroaction de liaison latérale se chevauchent dans un domaine temporel, la détermination (S720), sur la base des priorités des N1 premiers canaux de rétroaction de liaison latérale et des priorités des N2 seconds canaux de rétroaction de liaison latérale, de la transmission des premiers canaux de rétroaction de liaison latérale ou de la réception des seconds canaux de rétroaction de liaison latérale, N1 et N2 étant tous deux des entiers positifs ;
la transmission (S740) d'au moins l'un des N1 premiers canaux de rétroaction de liaison latérale au moyen d'un premier filtre de transmission de domaine spatial en réponse à la détermination de la transmission des premiers canaux de rétroaction de liaison latérale, le premier filtre de transmission de domaine spatial correspondant à un premier faisceau de transmission ; et
la réception (S760) d'au moins l'un des N2 seconds canaux de rétroaction de liaison latérale au moyen d'un premier filtre de réception de domaine spatial en réponse à la détermination de la réception des seconds canaux de rétroaction de liaison latérale, le premier filtre de réception de domaine spatial correspondant à un premier faisceau de réception ;
dans lequel le premier filtre de transmission de domaine spatial correspond à un filtre de transmission de domaine spatial de l'un des N1 premiers canaux de rétroaction de liaison latérale, et le premier filtre de réception de domaine spatial correspond à un filtre de réception de domaine spatial de l'un des N2 seconds canaux de rétroaction de liaison latérale ;
dans lequel la réception (S760) d'au moins l'un des N2 seconds canaux de rétroaction de liaison latérale au moyen du premier filtre de réception de domaine spatial comprend :
la détermination du premier filtre de réception de domaine spatial correspondant au second canal de rétroaction de liaison latérale ayant la priorité la plus élevée en réponse à la détermination de la réception des seconds canaux de rétroaction de liaison latérale ;
la détermination de ${N}_{sch , Rx , PSFCH}^{′}$ seconds canaux de rétroaction de liaison latérale correspondant au premier filtre de réception de domaine spatial parmi les N2 seconds canaux de rétroaction de liaison latérale ;
la détermination de N_{Rx PSFCH} seconds canaux de rétroaction de liaison latérale parmi les ${N}_{sch , Rx , PSFCH}^{′}$ seconds canaux de rétroaction de liaison latérale sur la base de secondes informations, les secondes informations comprenant au moins l'un des éléments suivants : des priorités des N2 seconds canaux de rétroaction de liaison latérale ; ou un nombre maximal N_{max,Rx,PSFCH} de seconds canaux de rétroaction de liaison latérale reçus simultanément, N_{max,Rx,PSFCH} étant un entier positif ; et
la réception des N_{Rx,PSFCH} seconds canaux de rétroaction de liaison latérale au moyen du premier filtre de réception de domaine spatial ;
dans lequel la détermination des N_{Rx,PSFCH} seconds canaux de rétroaction de liaison latérale parmi les ${N}_{sch , Rx , PSFCH}^{′}$ seconds canaux de rétroaction de liaison latérale sur la base des secondes informations comprend :
la détermination de tous les ${N}_{sch , Rx , PSFCH}^{′}$ seconds canaux de rétroaction de liaison latérale en tant que les N_{Rx}, _{PSFCH} seconds canaux de rétroaction de liaison latérale en réponse au fait que ${N}_{sch , Rx , PSFCH}^{′}$ est inférieur à N_{Rx}, _{PSFCH} ; ou
la sélection de N_{max,RX,PSFCH} seconds canaux de rétroaction de liaison latérale parmi les ${N}_{sch , Rx , PSFCH}^{′}$ seconds canaux de rétroaction de liaison latérale sur la base des priorités dans un ordre allant de la plus élevée à la plus faible en réponse au fait que ${N}_{sch , Rx , PSFCH}^{′}$ est supérieur à N_{max,Rx,PSFCH}, et la détermination des seconds canaux de rétroaction de liaison latérale N max,RX_{,PSFCH} en tant que les N_{Rx,PSFCH} seconds canaux de rétroaction de liaison latérale.

2. Procédé selon la revendication 1, dans lequel la détermination (S720), sur la base des priorités des N1 premiers canaux de rétroaction de liaison latérale et des priorités des N2 seconds canaux de rétroaction de liaison latérale, de la transmission des premiers canaux de rétroaction de liaison latérale ou de la réception des seconds canaux de rétroaction de liaison latérale comprend :
la détermination d'une valeur de priorité P1 correspondant à une priorité la plus élevée des N1 premiers canaux de rétroaction de liaison latérale et d'une valeur de priorité P2 correspondant à une priorité la plus élevée des N2 seconds canaux de rétroaction de liaison latérale, P1 et P2 étant tous deux des entiers ;
la détermination de la transmission des premiers canaux de rétroaction de liaison latérale en réponse au fait que la valeur de priorité P1 est inférieure à la valeur de priorité P2 ; et
la détermination de la réception des seconds canaux de rétroaction de liaison latérale en réponse au fait que la valeur de priorité P1 est supérieure à la valeur de priorité P2.

3. Procédé selon la revendication 1, dans lequel la transmission (S740) d'au moins l'un des N1 premiers canaux de rétroaction de liaison latérale au moyen du premier filtre de transmission de domaine spatial en réponse à la détermination de la transmission des premiers canaux de rétroaction de liaison latérale comprend :
la détermination (S742) du premier filtre de transmission de domaine spatial correspondant au premier canal de rétroaction de liaison latérale ayant la priorité la plus élevée en réponse à la détermination de la transmission des premiers canaux de rétroaction de liaison latérale ;
la détermination (S744) de N_{Tx,PSFCH} premiers canaux de rétroaction de liaison latérale parmi les N1 premiers canaux de rétroaction de liaison latérale au moyen du premier filtre de transmission de domaine spatial, N_{Tx,PSFCH} étant inférieur ou égal à N1 ; et
la transmission (S746) des N_{Tx}, _{PSFCH} premiers canaux de rétroaction de liaison latérale au moyen du premier filtre de transmission de domaine spatial.

4. Procédé selon la revendication 3, dans lequel la détermination (S744) des N_{Tx,PSFCH} premiers canaux de rétroaction de liaison latérale parmi les N1 premiers canaux de rétroaction de liaison latérale au moyen du premier filtre de transmission de domaine spatial comprend :
la détermination de ${N}_{sch , Tx , PSFCH}^{′}$ premiers canaux de rétroaction de liaison latérale correspondant au premier filtre de transmission de domaine spatial parmi les N1 premiers canaux de rétroaction de liaison latérale ; et
la détermination des N_{Tx,PSFCH} premiers canaux de rétroaction de liaison latérale parmi les ${N}_{sch , Tx , PSFCH}^{′}$ premiers canaux de rétroaction de liaison latérale, ${N}_{sch , Tx , PSFCH}^{′}$ étant inférieur ou égal à N1 et supérieur ou égal à N_{Tx,PSFCH}.

5. Procédé selon la revendication 4, dans lequel la détermination des N_{Tx,PSFCH} premiers canaux de rétroaction de liaison latérale parmi les ${N}_{sch , Tx , PSFCH}^{′}$ premiers canaux de rétroaction de liaison latérale comprend :
la détermination des N_{Tx,PSFCH} premiers canaux de rétroaction de liaison latérale parmi les ${N}_{sch , Tx , PSFCH}^{′}$ premiers canaux de rétroaction de liaison latérale sur la base de premières informations ; dans lequel les premières informations comprennent au moins l'un des éléments suivants :
les priorités des N1 premiers canaux de rétroaction de liaison latérale ;
un nombre maximal N_{max,PSFCH} de premiers canaux de rétroaction de liaison latérale transmis simultanément, N_{max,psfch} étant un entier positif ;
une puissance de transmission maximale P_{CMAX} ; ou
des informations d'indication indiquant s'il faut effectuer une commande de puissance sur la base d'une perte de trajet de liaison descendante.

6. Procédé selon la revendication 5, dans lequel la détermination des N_{Tx,PSFCH} premiers canaux de rétroaction de liaison latérale parmi les ${N}_{sch , Tx , PSFCH}^{′}$ premiers canaux de rétroaction de liaison latérale sur la base des premières informations comprend :
la sélection des N_{Tx,PSFCH} premiers canaux de rétroaction de liaison latérale parmi les ${N}_{sch , Tx , PSFCH}^{′}$ premiers canaux de rétroaction de liaison latérale sur la base des priorités dans un ordre allant de la plus élevée à la plus faible en réponse à la commande de puissance sur la base du fait que la perte de trajet de liaison descendante n'est pas configurée, N_{Tx,PSFCH} satisfaisant à une condition : ${N}_{Tx , PSFCH} = min \left({N}_{sch , Tx , PSFCH}^{′}, {N}_{max , PSFCH}\right)$, et chacun des N_{Tx,PSFCH} premiers canaux de rétroaction de liaison latérale a une même puissance de transmission, et satisfait à : P_{PSFCH} = P_{CMAX} - 10log₁₀(N_{Tx,PSFCH}).

7. Procédé selon la revendication 5, dans lequel la détermination des N_{Tx,PSFCH} premiers canaux de rétroaction de liaison latérale parmi les ${N}_{sch , Tx , PSFCH}^{′}$ premiers canaux de rétroaction de liaison latérale sur la base des premières informations comprend :
la détermination (S744a) d'une puissance de transmission maximale de canal unique des premiers canaux de rétroaction de liaison latérale sur la base de la perte de trajet de liaison descendante en réponse au fait que la commande de puissance sur la base de la perte de trajet de liaison descendante est configurée ; et
la sélection (S744b) des N_{Tx,PSFCH} premiers canaux de rétroaction de liaison latérale parmi les ${N}_{sch , Tx , PSFCH}^{′}$ premiers canaux de rétroaction de liaison latérale sur la base de la puissance de transmission maximale de canal unique et de P_{CMAX} ;
dans lequel la détermination de la puissance de transmission maximale de canal unique des premiers canaux de rétroaction de liaison latérale sur la base de la perte de trajet de liaison descendante en réponse au fait que la commande de puissance sur la base de la perte de trajet de liaison descendante est configurée comprend :
le calcul de la puissance de transmission maximale de canal unique sur la base de la formule suivante : P_{PSFCH,One} - P_{O_PSFCH} + 10log₁₀(2^{µ}) + α_{PSFCH}·PL_{D}, où P_{O_PSFCH} représente un paramètre configuré par une signalisation de couche supérieure pour effectuer la commande de puissance sur la base de la perte de trajet de liaison descendante, α_{PSFCH} représente un facteur de compensation de perte de trajet de liaison descendante configuré par la signalisation de couche supérieure pour effectuer la commande de puissance pour les premiers canaux de rétroaction de liaison latérale, PL_{D} représente la perte de trajet de liaison descendante estimée par un terminal, et µ est déterminé sur la base d'un paramètre d'espacement entre sous-porteuses.

8. Procédé selon la revendication 7, dans lequel la sélection (S744b) des N_{Tx}, _{PSFCH} premiers canaux de rétroaction de liaison latérale parmi les ${N}_{sch , Tx , PSFCH}^{′}$ premiers canaux de rétroaction de liaison latérale comprend :
la sélection des N_{Tx,PSFCH} premiers canaux de rétroaction de liaison latérale parmi les ${N}_{sch , Tx , PSFCH}^{′}$ premiers canaux de rétroaction de liaison latérale sur la base de conditions de sélection, les conditions de sélection comprenant : le fait qu'une puissance de transmission totale des N_{Tx,PSFCH} premiers canaux de rétroaction de liaison latérale n'est pas supérieure à P_{CMAX}, et que N_{Tx,psfch} est inférieur ou égal à $min \left({N}_{sch , Tx , PSFCH}^{′}, {N}_{max , PSFCH}\right)$.

9. Procédé selon la revendication 8, dans lequel la sélection des N_{Tx}, _{PSFCH} premiers canaux de rétroaction de liaison latérale parmi les ${N}_{sch , Tx , PSFCH}^{′}$ premiers canaux de rétroaction de liaison latérale sur la base des conditions de sélection comprend :
la sélection des ${N}_{sch , Tx , PSFCH}^{′}$ premiers canaux de rétroaction de liaison latérale en réponse au fait que ${N}_{sch , Tx , PSFCH}^{′}$ est inférieur ou égal à Nₘₐₓ , _{PSFCH} et qu'une puissance de transmission totale des ${N}_{sch , Tx , PSFCH}^{′}$ premiers canaux de rétroaction de liaison latérale n'est pas supérieure à P_{CMAX} ; ou
la sélection de Nₘₐₓ, _{PSFCH} premiers canaux de rétroaction de liaison latérale en réponse au fait que ${N}_{sch , Tx , PSFCH}^{′}$ est supérieur à Nₘₐₓ, _{PSFCH} et qu'une puissance de transmission totale des Nₘₐₓ, _{PSFCH} premiers canaux de rétroaction de liaison latérale n'est pas supérieure à P_{CMAX}.

10. Appareil de transmission de canaux de rétroaction de liaison latérale, comprenant :
un module de détermination (1520), configuré pour : dans un cas où N1 premiers canaux de rétroaction de liaison latérale et N2 seconds canaux de rétroaction de liaison latérale se chevauchent dans un domaine temporel, déterminer, sur la base des priorités des N1 premiers canaux de rétroaction de liaison latérale et des priorités des N2 seconds canaux de rétroaction de liaison latérale, la transmission des premiers canaux de rétroaction de liaison latérale ou la réception des seconds canaux de rétroaction de liaison latérale, N1 et N2 étant tous deux des entiers positifs ;
un module de transmission (1540) configuré pour transmettre au moins l'un des N1 premiers canaux de rétroaction de liaison latérale au moyen d'un premier filtre de transmission de domaine spatial en réponse à la détermination de la transmission des premiers canaux de rétroaction de liaison latérale, le premier filtre de transmission de domaine spatial correspondant à un premier faisceau de transmission ; et
un module de réception (1560) configuré pour recevoir au moins l'un des N2 seconds canaux de rétroaction de liaison latérale au moyen d'un premier filtre de réception de domaine spatial en réponse à la détermination de la réception des seconds canaux de rétroaction de liaison latérale, le premier filtre de réception de domaine spatial correspondant à un premier faisceau de réception ;
dans lequel les N1 premiers canaux de rétroaction de liaison latérale sont des canaux de rétroaction de liaison latérale pour la transmission, les N2 seconds canaux de rétroaction de liaison latérale sont des canaux de rétroaction de liaison latérale pour la réception, le premier filtre de transmission de domaine spatial correspond à un filtre de transmission de domaine spatial de l'un des N1 premiers canaux de rétroaction de liaison latérale, et le premier filtre de réception de domaine spatial correspond à un filtre de réception de domaine spatial de l'un des N2 seconds canaux de rétroaction de liaison latérale ;
dans lequel
le module de détermination (1520) est en outre configuré pour : déterminer le premier filtre de réception de domaine spatial correspondant au second canal de rétroaction de liaison latérale ayant la priorité la plus élevée en réponse à la détermination de la réception des seconds canaux de rétroaction de liaison latérale ;
déterminer ${N}_{sch , Rx , PSFCH}^{′}$ seconds canaux de rétroaction de liaison latérale correspondant au premier filtre de réception de domaine spatial parmi les N2 seconds canaux de rétroaction de liaison latérale ; et déterminer N_{Rx,PSFCH} seconds canaux de rétroaction de liaison latérale parmi les ${N}_{sch , Rx , PSFCH}^{′}$ seconds canaux de rétroaction de liaison latérale sur la base de secondes informations, les secondes informations comprenant au moins l'un des éléments suivants : les priorités des N2 seconds canaux de rétroaction de liaison latérale ; ou un nombre maximal N_{max,Rx,PSFCH} de seconds canaux de rétroaction de liaison latérale reçus simultanément, N_{max,Rx,PSFCH} étant un entier positif ; et
le module de réception (1560) est en outre configuré pour : recevoir les N_{Rx,PSFCH} seconds canaux de rétroaction de liaison latérale au moyen du premier filtre de réception de domaine spatial ;
le module de détermination (1520) étant en outre configuré pour :
déterminer tous les ${N}_{sch , Rx , PSFCH}^{′}$ seconds canaux de rétroaction de liaison latérale en tant que les N_{Rx}, _{PSFCH} seconds canaux de rétroaction de liaison latérale en réponse au fait que N_{sch,Rx,PSFCH} est inférieur à N_{Rx}, _{PSFCH} ; ou
sélectionner N_{max,RX,PSFCH} seconds canaux de rétroaction de liaison latérale parmi les ${N}_{sch , Rx , PSFCH}^{′}$ seconds canaux de rétroaction de liaison latérale sur la base des priorités dans un ordre allant de la plus élevée à la plus faible en réponse au fait que ${N}_{sch , Rx , PSFCH}^{′}$ est supérieur à N_{max,Rx,PSFCH}, et déterminer les seconds canaux de rétroaction de liaison latérale N max,RX_{,PSFCH comme les} en tant que les N_{Rx,PSFCH} seconds canaux de rétroaction de liaison latérale.

11. Puce, configurée pour exécuter le procédé de transmission des canaux de rétroaction de liaison latérale tel que défini dans l'une quelconque des revendications 1 à 9.
